# EUROPÄISCHE PATENTSCHRIFT

(11) **EP 3 554 251 B1**
(45) Veröffentlichungstag und Bekanntmachung des Hinweises auf die Patenterteilung: **17.03.2021**
(21) Anmeldenummer: 17822256.8
(22) Anmeldetag: 18.12.2017
(51) Int. Cl.: A23G 3/34, A23G 3/54, A23G 3/56

(54) **LUTSCHER MIT FLÜSSIG GEFÜLLTEM KERN UND STIEL**
LOLLYPOP WITH LIQUID FILLED CORE AND THE HANDLE
SUCETTE FOURRÉE DE LIQUIDE ET BÂTON

(30) Priorität: 16.12.2016 EP 16204758
(43) Veröffentlichungstag der Anmeldung: 23.10.2019
(73) Patentinhaber: Puca, Giuseppe, 47798 Krefeld (DE)
(72) Erfinder: Puca, Giuseppe, 47798 Krefeld (DE)
(74) Vertreter: Gille Hrabal Partnerschaftsgesellschaft mbB Patentanwälte
(86) Internationale Anmeldenummer: PCT/EP2017/083352
(87) Internationale Veröffentlichungsnummer: WO 2018/109230

(56) Entgegenhaltungen:
- EP-A2- 0 130 446
- WO-A1-02/056697
- WO-A1-02/056698
- WO-A1-2016/102186
- WO-A1-2016/203036
- BE-A6- 1 009 422
- DE-A1-102012 209 159
- DE-U1-202012 005 451
- FR-A- 587 969

## Beschreibung

### TECHNISCHES GEBIET

Die vorliegende Erfindung betrifft ein neues Verfahren zur Herstellung eines Lutschers mit einer flüssigen Füllung im Kern und einem Stiel, sowie die mit diesem Verfahren erhältlichen Lutscher.

### BESCHREIBUNG

### HINTERGRUND DER ERFINDUNG UND STAND DER TECHNIK

Bonbons oder Lutscher, die flüssige oder halbfeste Füllungen enthalten, sind grundsätzlich bereits beschrieben. Derartige gefüllte Bonbonwaren weisen in der Regel eine Zucker-basierte feste Hülle mit einem Hohlraum auf, worin eine flüssige oder halbfeste Füllung eingefüllt wird. In Bonbons kann ein stabiler Einschluß der Flüssigkeit in den Hohlraum oder Kern erfolgen, indem dieser vollständig von der Zucker-basierten festen Hülle umschlossen wird.

Lutscher zeichnen sich gegenüber Bonbons dadurch aus, dass diese einen in die den Lutscher bildenden Zuckermasse eingedrückten Stiel aufweisen. Dadurch ist es jedoch naturgemäß nicht möglich, in Lutschern einen vollständigen (quasi übergangfreien) Abschluss der festen Hülle herzustellen, um damit eine Flüssigkeit innerhalb dieser Zucker-basierten festen Hülle sicher einzuschließen. An der Stelle, an der der Stiel in die die feste Hülle bildende Zuckermasse eingebracht wird, entsteht zwangsläufig eine Schwächung der Hüllstruktur oder eine Öffnung bzw. ein Übergang zwischen dem flüssig verfüllten Kern und dem Außenbereich. Je nach Beschaffenheit der Hülle bzw. der Stiel-Einschubstelle führt diese zwangsläufige zu einer Art Verletzung der festen Hülle. Je nach Einstecktiefe des Stiels bildet sich damit eine potentielle Austrittsmöglichkeit zwischen Kern und Außenwelt, durch die die im Kern befindliche Flüssigkeit aus dem Lutscher entweichen kann. Wird der Stiel zu tief in die Zuckerhülle eingedrückt, so dass dieser bis in den flüssig gefüllten Kern hineinreicht, ist ein dichter Verschluss dieser Einschubstelle nicht möglich und die flüssige Füllung läuft aus dem Lutscher aus, was selbstredend unerwünscht ist. Grundsätzlich wäre es denkbar, den Stiel nur soweit in die die feste Hülle bildende Zuckermasse einzustecken, dass dieser nicht bis in den Kern hineinreicht und der flüssige Kern somit vollständig von der erstarrten Zuckerhülle eingeschlossen bleibt. Übliche Lutscher sind jedoch, bedingt durch die übliche Mundgröße, hinsichtlich ihrer maximalen Größe (Durchmesser) beschränkt und werden in der Regel in Form von Kugeln oder sphärischen Körpern geformt, um sie dadurch optimal an die Mundgeometrie anzupassen. Wieviel flüssige Füllung in einer entsprechenden üblichen maximalen Lutschergröße eingefüllt werden kann, hängt dann von der Dicke des Hüllmaterials und der dadurch bedingten verbleibenden Größe des Kernvolumens ab. Um eine flüssige Füllung in einem nennenswerten und für den Verbraucher erwartungsgemäßen Volumen in einem Lutscher mit geeigneten Lutschbedingungen unterbringen zu können, kann die feste Hüllstruktur in der Regel nicht in einer ausreichenden Dicke ausgebildet werden, die es erlaubt, den Stiel nur in der festen Zuckerhülle einzustecken ohne bis in den Kern hineinzureichen. Mit den dadurch bedingten zu geringen Einstecktiefen kann keine hinreichend stabile Verankerung des Stiels in dem Lutscher erreicht werden.

So beschreiben beispielsweise die DE 10 2012 209159 und die DE202012005451U1 einen mit einer alkoholhaltigen Flüssigkeit gefüllten Lutscher und ein Verfahren zu dessen Herstellung durch Gießen eines Hohlkörpers zur Bildung der Lutscherhülle, Einfüllen der alkoholischen Flüssigkeit, und Eindrücken eines Stiels in das noch weiche Hüllmaterial. Anschließend wird der Lutscher durch Abkühlung erstarrt. Die durch dieses Verfahren erhältlichen Lutscher weisen jedoch keine hinreichende Dichtigkeit an der Einsteckstelle des Stiels auf. Üblicherweise ziehen sich Materialien beim Abkühlen und Erstarren etwas zusammen und entsprechend zieht sich auch das Hüllmaterial des hierin beschriebenen Lutschers beim Abkühlen und Erstarren nach dem Einstecken des Stiels zusammen. Dadurch steckt der Stiel einerseits nicht mehr so fest in dem Lutscher und kann beim Verpacken, Lagern, Verschicken oder beim Verzehr leicht herausrutschen und andererseits wird auch der Austrittskanal zwischen Kern und Außenwelt vergrößert, was das Austreten der flüssigen Füllung begünstigt.

In der FR 587 969 werden gefüllte Süßwaren mit einem zuckerhaltigen Körper der mit einer alkoholischen Flüssigkeit gefüllt ist beschrieben. Gemäß Figur 1 und 2 der FR 587 969 kann in diese gefüllten Formkörper auch ein Stiel (3) eingeführt werden, der jedoch durch das Hüllmaterial (1) bis in den gefüllten Kern (2) hineinreicht. Aus dem Dokument ergeben sich keine Hinweise, ob bzw. wie die oben beschriebenen Probleme des potentiellen Austretens der flüssigen Füllung durch diesen Austrittskanal zufriedenstellend gelöst werden können.

Ähnlich beschreibt auch die DE 20 2009 000 893 U1 einen Lutscher, worin ein hohler Stiel (3, 4) durch das feste Hüllmaterial (1) in den flüssig gefüllten Hohlraum (2) hineinreicht. Ein Austritt der Flüssigkeit durch den hohlen Stiel soll durch einen Stopfen (5) verhindert werden. Das Problem des potentiellen Austritts der Flüssigkeit an der Einschubstelle / Grenzfläche des Stiel zur festen Zuckerhülle wird hierin weder erwähnt noch wird eine Möglichkeit zu dessen Unterbindung genannt.

Die WO 2012/0074 A1 beschreibt einen Schokolade gefüllten Lutscher. Darin werden jedoch ausschließlich feste oder derart hochviskose Schokolade-basierte Füllungen in den Lutscher eingefüllt, dass die vorstehend beschriebenen Probleme, die mit einer flüssigen Füllung einhergehen, nicht auftreten.

Auch in konventionellen kontinuierlichen Lutscherherstellprozessen macht die Herstellung flüssig gefüllter Lutscher Probleme, wie z.B. in der WO 2016/102186 A1 beschrieben. So wird beim Formen oder Prägen der flüssig verfüllten Lutscherformkörper in der Regel ein nicht unerheblicher Druck auf das gefüllt Hüllmaterial ausgeübt, wodurch Risse, Öffnungen oder Verletzungen des Hüllmaterials entstehen können, durch die die flüssige Füllung dann austritt und die Maschinen verschmutzt und zu unwirtschaftlichen Verfahrensausfällen zur Reinigung der Anlagen führt. Die WO 2016/102186 A1 löst das Problem des unerwünschten Auslaufens ("Leakage") der Flüssigkeit aus dem Lutscher, indem sie eine zunächst feste Zucker-basierte Füllmasse (Fondant) herstellt und diese mit einem Invertase Enzym versetzt. Diese feste Fondantmasse wird dann im kontinuierlichen Herstellprozess in die ebenfalls feste Zuckerhüllmasse eingearbeitet. Die Verflüssigung setzt dann mit der Spaltung der Fondant-Zucker durch die Invertase erst nach Fertigstellung der Lutscher ein. Derartige Lutscher sind jedoch hinsichtlich der möglichen flüssigen Füllungen stark limitiert und können nur zu Lösungen aus Invertzuckern führen. Flüssige Füllungen auf Basis von Milchprodukten oder alkoholische Füllungen beispielsweise sind dieser Technologie nicht zugänglich.

WO2002056698 und WO2002056697 beschreiben Verfahren zur Herstellung von mehrschichtigen Lutschern, umfassend eine Außenschicht aus einem Hartkaramellen-Material, einer inneren Schicht auf Kaugummibasis und eine flüssige bzw. halb-feste pastöse Füllung. Die Lutscher werden mittels Extrusionsverfahren hergestellt. Alkoholhaltige Lutscher werden darin nicht beschrieben.

Aus der WO2016/203036 A1 sind alkoholhaltige Lutscher bekannt, insbesondere solche worin der Alkohol homogen im festen Hüllmaterial verteilt vorliegt. Das vorliegende Verfahren stellt ein gegenüber dem in der WO2016/203036 A1 beschriebenen Verfahren und der damit erhältlichen Lutscher eine Verbesserung dar.

EP0130446 A2 beschreibt ganz allgemein Kaschierverfahren von Zucker- und Füllmassen zur Herstellung von Bonbons ohne konkrete Rezepturen oder Zusammensetzungen zu beschreiben. Die Herstellung von Lutschern wird nicht offenbart.

BE1009422 A6 beschreibt Stiele für Lutscher.

Gerade alkoholhaltige Füllungen bedingen jedoch noch das weitere Problem der hohen Flüchtigkeit, so dass bei einem nicht vollständigen und dauerhaft stabilen Einschluß der alkoholische Flüssigkeit in dem Lutscher der Alkohol verdampft und dem Konsumenten beim Verzehr nicht mehr oder nur noch in reduzierter Menge zur Verfügung steht. Auch stellt die Einarbeitung alkoholischer Flüssigkeiten in eine für die Formgebung notwendigerweise erhitzte Zuckermasse eine zusätzliche Herausforderung dar, da naturgemäß der Alkohol beim Inkontaktbringen mit der Zucker-basierten Lutscherhüllmasse bei den üblichen und für die Formgebung notwendigen Verarbeitungstemperaturen ebenfalls bereits verdampft.

### AUFGABE DER ERFINDUNG

Die Aufgabe der vorliegenden Erfindung bestand darin, ein neues Verfahren zur Herstellung von Lutschern mit flüssiger Füllung bereitzustellen, welches die vorstehend geschilderten Nachteile des Stands der Technik beseitigt. Insbesondere lag die Aufgabe der Erfindung darin, ein neues Herstellverfahren für Lutscher mit flüssiger Füllung bereitzustellen, worin die flüssige Füllung dauerhaft und stabil (d.h. ohne Auslaufen) in dem Lutscher verkapselt werden kann. Insbesondere soll es mit dem neuen Verfahren außerdem möglich sein, den Stiel fest in dem Lutscher zu verankern. Des Weiteren sollte es mit dem neuen Verfahren möglich sein, hinsichtlich der flüssigen Füllungen eine hohe Variabilität zu ermöglichen. Insbesondere soll das neue Verfahren die Einarbeitung von alkoholischen Flüssigkeiten ermöglichen, ohne dass sich der darin enthaltene Alkohol bereits während des Herstellverfahrens oder bei der Lagerung der Alkohol-gefüllten Lutscher verflüchtigt. Desweiteren besteht eine Aufgabe der Erfindung darin, flüssig gefüllte Lutscher bereitzustellen, die außerdem einen größtmöglichen Füllgrad mit einem maximalen Füllvolumen an flüssiger Füllung aufweisen. Des Weiteren sollte ein Lutscher herstellbar sein, worin auch in der festen Lutscherhülle Alkohol enthalten ist, um beim Verzehr über nahezu die gesamte Verzehrszeit eine Alkoholfreisetzung zu erzielen, ohne dass sich dieser Alkohol in der Lutscherhülle während des Herstellverfahrens oder bei der Lagerung verflüchtigt.

Gelöst wird diese Aufgabe durch das neue und verbesserte Herstellverfahren gemäß der vorliegenden Erfindung.

### DETAILLIERTE BESCHREIBUNG DER ERFINDUNG

Die Erfindung betrifft ein neues Verfahren zur Herstellung eines Lutschers mit flüssig gefülltem Kern und Stiel, umfassend die folgenden Verfahrensschritte:
(1) Herstellung eines Lutscher-Hüllmaterials, umfassend die Schritte
   (1-1) Herstellung einer Hartbonbon-Hüllmasse enthaltend mindestens einen Zucker, Zuckeraustauschstoff, zuckerähnlichen Stoff oder Mischungen davon und Glycerin,
      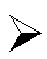 Mischen der Zuckerbestandteile mit Wasser,
      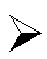 Kochen dieser Zuckermischung bei bis zu 170 °C bis zum Erhalt einer geschmolzenen homogenen Zuckermasse,
      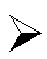 Einmischen von bis zu 6 Gew. % Glycerin, bezogen auf die Gesamtzusammensetzung der Hartbonbon-Hüllmasse,
      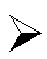 gegebenenfalls Einmischen eines oder mehrerer Zusatzstoffe aus der Gruppe bestehend aus Verdickungsmitteln, Aromastoffen, Farbstoffen, Süßstoffen, Säuerungsmitteln, Milchprodukten, färbenden Lebensmitteln und Mischungen davon unter
      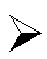 Erhalt einer viskosen, modellierbaren, zähplastischen, streich- oder fließfähigen Hartbonbon-Hüllmasse;
   (1-2) Herstellung einer Kaschiermasse auf Basis mindestens eines Zuckers, Zuckeraustauschstoffs oder zuckerähnlichen Stoffs, mindestens eines Verdickungsmittels aus der Gruppe der Cellulosen oder Hydrokolloidgele durch
      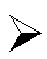 Mischen der Bestandteile der Kaschiermasse,
      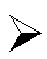 gegebenenfalls Einrühren von Ethanol oder einer alkoholischen Flüssigkeit,
      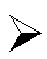 gegebenenfalls Einmischen eines oder mehrerer Zusatzstoffe aus der Gruppe bestehend aus Verdickungsmitteln, Aromastoffen, Farbstoffen, Süßstoffen, Säuerungsmitteln, Milchprodukten, färbenden Lebensmitteln und Mischungen davon unter
      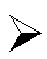 Erhalt einer homogenen viskosen, modellierbaren, zähplastischen, fließ- oder streichfähigen Mischung;
(2) Herstellung eines kontinuierlichen Zuckerstrangs, umfassend die Schritte
   (2-1) Ausbringen der Hartbonbon-Hüllmasse aus Schritt (1-1) in einer kontinuierlichen Schicht und Abkühlen dieser Schicht auf eine Temperatur im Bereich von 30 °C bis maximal 90 °C, und Einrollen, Falten oder Einklappen der Hartbonbon-Hüllmasse unter Erhalt eines ungefüllten Zuckerstrangs;
   (2-2) Herstellung eines gefüllten Zuckerstrangs durch Aufbringen der Kaschiermasse aus Schritt (1-2) auf einer kontinuierlichen Schicht der Hartbonbon-Hüllmasse gemäß Schritt (2-1) und Umschließen der Kaschiermasse mit der Schicht der Hartbonbon-Hüllmasse durch Einrollen, Falten oder Einklappen der Hartbonbon-Hüllmasse unter Erhalt eines gefüllten Zuckerstrangs;
(3) Zuführung des ungefüllten und des gefüllten Zuckerstrangs aus Schritt (2-1) bzw. (2-2) in einen Kegelroller oder Extruder und Formung zu einem verjüngten (reduzierten) Zuckerstrang zur Bildung des Lutscher-Hüllmaterials;
(4) kontinuierliche Befüllung des verjüngten Zuckerstrangs mit einer flüssigen oder fließfähigen Füllung über ein am Austritt des Kegelrollers oder Extruders angeordneten Befüllungsrohr unter Erhalt eines flüssig verfüllten Zuckerstrangs;
(5) Formgebung des aus Schritt (4) erhaltenen flüssig verfüllten Zuckerstrangs durch Schneiden und/oder Prägen unter Erhalt eines Formkörpers mit flüssiger Füllung;
(6) Einbringen eines Stiels in den Formkörper aus Schritt (5); und
(7) Abkühlen des Formkörpers mit flüssiger Füllung und Stiel unter Erhalt eines Lutschers mit flüssig gefülltem Kern und Stiel, worin der in Schritt (6) in den flüssig gefüllten Formkörper eingebrachte Stiel aus einem Material gebildet ist, welches eine raue oder aufgeraute Oberfläche aufweist und/oder dadurch gekennzeichnet ist, dass dieser an dem in den Formkörper eingebrachten Ende eine Ankerregion aufweist, mit der der Stiel in den Formkörper eingebracht wird.

Eine Ankerregion des erfindungsgemäßen Stiels bezeichnet im Sinn der vorliegenden Erfindung eine oder mehrere anker-, flügel- oder widerhaken-artige Erweiterungen, Ausstülpungen oder Vorsprünge im bzw. am Stiel, die über den regulären Grund-Durchmesser des Stiels hinausragen. Mit regulärem Grund-Durchmesser des Stiels wird darin der Stieldurchmesser bezeichnet, den der Stiel im Wesentlichen über den größten Teil seiner Länge aufweist. Der Stiel kann zusätzlich in bestimmten Regionen (z.B. im Mittelteil oder an seinem unteren Ende) Modifikationen gegenüber herkömmlichen Stielen aufweisen, die vom regulären Grund-Durchmesser abweichende Durchmesser oder vertikale Ausdehnungen bedingen, z.B. durch eine partielle Abflachung des Stiels. Derartige Abflachungen können z.B. für einen verbesserten Griff durch breitere Griff-Fläche beim Halten des Lutscherstiels durch den Verbraucher sorgen. Die vorgenannte Ankerregion ragt bevorzugt nicht über den durch solche zusätzlichen Stiel-Modifikationen möglicherweise gebildeten größeren Durchmesser oder vertikale Ausdehnungen hinaus. Durch eine derartige Ankerregion weist der erfindungsgemäße Stiel an seinem Kopfende (das Stielende, welches in den Lutscher eingebracht wird) einen oder mehrere Vorsprünge, Ausbuchtungen, Auskerbungen, Nuten, Falze oder Flügel oder eine schirm- oder Pilzkopf-artige Erweiterung auf. Mit dieser Ankerregion kann der Stiel in dem Lutscher fixiert und stabil in dem Lutschermaterial verankert werden.

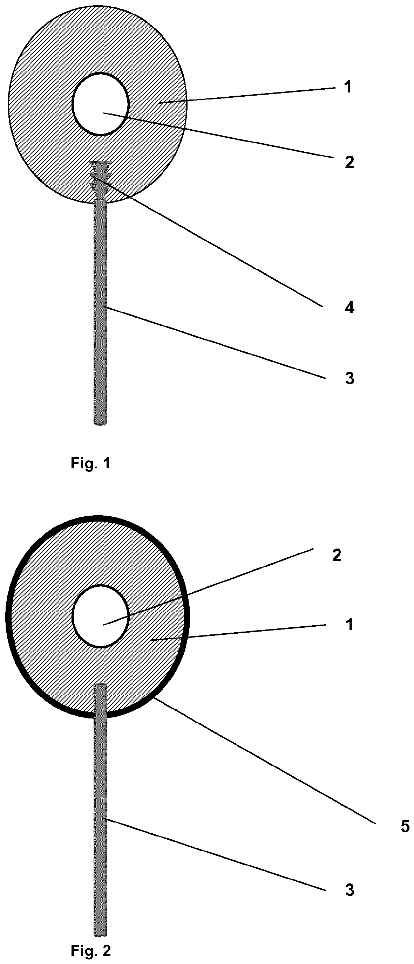

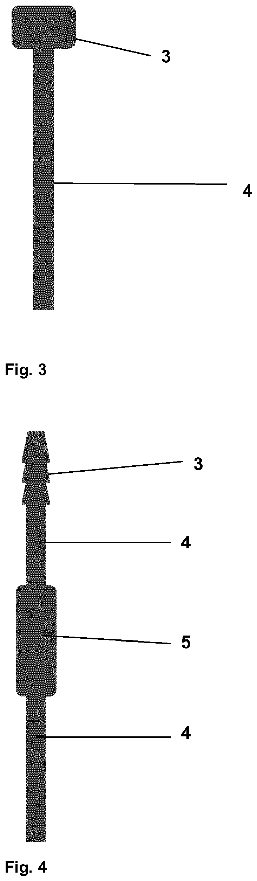

In einer besonderen Ausführungsform ist die vorgenannte Ankerregion des Stiels insbesondere in einer Christbaum- oder Tannenbaum-förmigen mehrstufigen Kaskade von Auskerbungen ausgebildet bzw. in einer Art, wie sie von klassischen Spreizdübeln bekannt ist. Beispielhafte Ausgestaltungen zeigen die Figuren 1 bis 3.

Der Stiel kann außerdem oder stattdessen auch aus einem Material gebildet sein, welches eine raue oder aufgeraute Oberfläche aufweist. Dies erhöht ebenfalls die Haftung des festen Lutscherhüllmaterials an dem Stiel. Geeignete Stielmaterialien umfassen z.B. Kunststoffe, Holz, Papier, Glas und sonstige übliche Stielmaterialien. Die gewählten Stielmaterialien sollten lebensmittelecht und für den Verbraucher auch bei Kontakt mit den Schleimhäuten im Mund unbedenklich sein. Besonders bevorzugt sind Kunststoffe und Holz, da sich mit diesen Werkmaterialien besonders gut die Verankerungselemente am Kopf des Stiels verwirklichen lassen. Ganz besonders bevorzugt sind Kunststoffe, da aus diesen erfindungsgemäße Stiele z.B. mittels herkömmlichen Extrusionsverfahren besonders gut herstellbar sind.

Das erfindungsgemäße Verfahren ist insbesondere auch besonders als kontinuierliches Herstellverfahren geeignet.

Der Erfinder der vorliegenden Erfindung hat außerdem überraschend gefunden, dass ein stabiler Verschluß der verfüllten Flüssigkeiten in dem festen Lutscherhüllmaterial erreicht und ein Auslaufen während des kontinuierlichen Herstell-, insbesondere Prägeprozesses, verhindert werden kann, wenn eine gegenüber herkömmlichen kontinuierlichen Lutscherprägeverfahren deutlich verlangsamte Verfahrensführung gewählt wird. Üblicherweise arbeiten kontinuierliche Lutscherprägemaschinen mit einer Prägegeschwindigkeit von 1.700 bis zu 2.000 Lutschern pro Minute. Bei derart schnellen Prägevorgängen treten jedoch immer wieder Lecks in den Lutscherhüllen auf, die zu einem Auslaufen der flüssigen Füllung und Verschmutzungen und damit Stillstand der Anlagen führen. Eine auf eine kontinuierliche Formgebung mit Prägegeschwindigkeiten von maximal 750 Lutschern pro Minute verlangsamte Verfahrensführung führte überraschend zu deutlich weniger Auslaufphänomenen und somit kaum Anlagenstillstand. Bevorzugt ist eine kontinuierliche Formgebung mit Prägegeschwindigkeiten von maximal 700 Lutschern pro Minute, bevorzugter maximal 500 Lutschern pro Minute bevorzugt maximal 400 Lutschern pro Minute, noch bevorzugter maximal 300 Lutschern pro Minute.

Wie vorstehend ausgeführt, ist es ein Ziel der Erfindung, flüssig gefüllte Lutscher mit einem größtmöglichen Füllgrad flüssiger Füllung herzustellen. Durch das neue erfindungsgemäße Verfahren war es überraschend möglich, auch mit vergleichsweise dünnen festen Hüllen eine stabile Verkapselung der eingeschlossenen Flüssigkeit und eine feste Verankerung des Stiels zu erreichen und damit das Hohlvolumen bei einer üblichen Lutschergröße von ca. 28 mm Durchmesser in Relation zu vergrößern. Dadurch wurde es überraschend möglich, deutlich erhöhte Füllgrade zu erreichen, wie die Tabelle 1 in den Ausführungsbeispielen beispielhaft zeigt.

Erfindungsgemäß bevorzugt sind feste Lutscherhüllen mit einer Dicke von mindestens 3,5 mm, mindestens 4,0 mm, mindestens 5,00 mm, mindestens 6,0 mm, mindestens 7,0 mm (bezogen auf einen im Wesentlichen runden oder sphärischen Lutscher).

Erfindungsgemäß bevorzugt sind Lutscher mit einem Durchmesser des Hohlraums (Kerns) von mindestens 25 mm, mindestens 20 mm, mindestens 18 mm, mindestens 17 mm, mindestens 16 mm (bezogen auf einen im Wesentlichen runden oder sphärischen Lutscher).

Bevorzugt weisen die erfindungsgemäßen Lutscher einen Gesamtdurchmesser von bis zu 30 mm, bevorzugt 28 mm auf.

Die vorliegende Erfindung umfasst das vorgenannte neue Verfahren, worin unter Verwendung der Schritte (1-1) und (1-2) in den Schritten (2-1) und (2-2) ein kontinuierlicher mit einer Kaschiermasse gefüllter Zuckerstrang hergestellt wird.

Ein solches Verfahren ermöglicht in einer besonders bevorzugten Ausführungsform außerdem die Herstellung einer mit Ethanol oder einer alkoholischen Flüssigkeit versetzten festen Lutscherhülle. Diese kann dann zusätzlich noch mit einer alkoholischen Füllung gefüllt werden.

Eine weitere Ausführungsform der vorliegenden Erfindung betrifft ein Verfahren wie vorstehend beschrieben, worin eine Kaschiermasse gemäß Schritt (1-2) auf Basis mindestens eines Zuckers, Zuckeraustauschstoffs oder zuckerähnlichen Stoffs, und gegebenenfalls mindestens eines Verdickungsmittels aus der Gruppe der Cellulosen oder Hydrokolloidgele, hergestellt wird, in die außerdem Ethanol oder eine alkoholische Flüssigkeit eingearbeitet wird; und umfassend die Schritte
(2) Herstellung des kontinuierlichen Zuckerstrangs aus mindestens einem gefüllten Zuckerstrang gemäß Schritt (2-2) sowie mindestens einem ungefüllten Zuckerstrang gemäß Schritt (2-1), wie vorstehend definiert;
(3) Herstellung des verjüngten Zuckerstrangs zur Bildung des Lutscher-Hüllmaterials aus dem mindestens einen gefüllten sowie dem mindestens einen ungefüllten Zuckerstrang aus Schritt (2-2) bzw. (2-1) im Kegelroller oder Extruder;
(4) kontinuierliche Befüllung des verjüngten Zuckerstrangs mit einer flüssigen oder fließfähigen Füllung;
(5) Formgebung durch Prägen unter Erhalt eines Formkörpers mit flüssiger Füllung;
(6) Einbringen eines Stiels aus einem Material, welches eine raue oder aufgeraute Oberfläche aufweist und/oder der dadurch gekennzeichnet ist, dass dieser an dem in den Formkörper eingebrachten Ende eine Ankerregion aufweist mit der der Stiel in den Formkörper aus Schritt (5) eingebracht und darin verankert wird; und
(7) Abkühlen des Formkörpers mit flüssiger Füllung und Stiel unter Erhalt eines Lutschers mit flüssig gefülltem Kern und Stiel sowie alkoholhaltigem Lutscher-Hüllmaterial.

Für die Herstellung von Lutschern mit alkoholischer Lutscherhülle gemäß der vorliegenden Erfindung hat der Erfinder der vorliegenden Erfindung überraschend gefunden, dass die Aufbringung der alkohol-haltigen Kaschiermasse aus Schritt (1-2) auf die zur Modellier- und Formbarkeit notwendigerweise erwärmte Hartbonbon-Hüllmasse in Schritt (2-1) besonders gut gelingt, wenn der Hartbonbon-Hüllmasse in Schritt (1-1) Glycerin hinzugefügt wird.

Bevorzugt wird der Hartbonbon-Hüllmasse in Schritt (1-1) bis zu 6,0 Gew.-% Glycerin, bevorzugt bis zu 5,0 Gew.-% Glycerin, bevorzugt 0,5 bis 6,0 Gew.% Glycerin, bevorzugter 0,5 bis 5,0 Gew.-% Glycerin, bevorzugter 1,0 bis 5,0 Gew.-% Glycerin, noch bevorzugter 3,0 bis 5,0 Gew.-% Glycerin, jeweils bezogen auf die Zusammensetzung der Hartbonbon-Hüllmasse, zugesetzt.

Der Zusatz von Glycerin wie hier definiert kann in jeder der vorstehend beschriebenen Ausführungsformen erfolgen und entsprechend vorteilhafte Effekte in der Verarbeitbarkeit der Hartbonbon-Hüllmasse in Schritt (1-1) bewirken.

Durch die Glycerin-Zugabe gelang es überraschend, die Verarbeitungstemperatur der Hartbonbon-Hüllmasse herabzusetzen, ohne dass die Viskosität zu hoch wurde und damit die Modellier- und Formbarkeit beeinträchtigt wurde um in den anschließenden Schritten der Herstellung des gefüllten Zuckerstrangs und des geprägten Lutschers stabile und gegen Auslaufen der Füllung dicht verschlossene Lutscher herstellen zu können.
Eine Ausführungsform des erfindungsgemäßen Verfahrens umfasst somit insbesondere die Schritte
(1-1) Herstellung der Hartbonbon-Hüllmasse, welcher dadurch gekennzeichnet ist, dass die Hartbonbon-Hüllmasse zusätzlich bis zu 6 Gew.% Glycerin, bezogen auf die Zusammensetzung der Hartbonbon-Hüllmasse, enthält;
(1-2) Herstellung einer Kaschiermasse auf Basis mindestens eines Zuckers, Zuckeraustauschstoffs oder zuckerähnlichen Stoffs, die mindestens ein Verdickungsmittel aus der Gruppe der Cellulosen oder Hydrokolloidgele enthalten kann, welche außerdem Ethanol oder eine alkoholische Flüssigkeit enthält;
(2) Herstellung eines kontinuierlichen Zuckerstrangs aus mindestens einem gefüllten Zuckerstrang gemäß Schritt (2-2) sowie mindestens einem ungefüllten Zuckerstrang gemäß Schritt (2-1);
(3) Herstellung des reduzierten (verjüngten) Zuckerstrang zur Bildung des Lutscher-Hüllmaterials aus dem mindestens einen gefüllten sowie dem mindestens einen ungefüllten Zuckerstrang aus Schritt (2-1) bzw. (2-2) im Kegelroller oder Extruder;
(4) kontinuierliche Befüllung des reduzierten (verjüngten) Zuckerstrangs mit einer flüssigen oder fließfähigen (sirupartigen) Füllung;
(5) Formgebung durch Prägen unter Erhalt eines Formkörpers mit flüssiger Füllung;
(6) Einbringen des Stiels wie in Anspruch 1 definiert in den Formkörper aus Schritt (5); und
(7) Abkühlen des Formkörpers mit flüssiger Füllung und Stiel unter Erhalt eines Lutschers mit flüssig gefülltem Kern und Stiel sowie alkoholhaltigem Lutscher-Hüllmaterial;
worin der in Schritt (6) in den flüssig gefüllten Formkörper eingebrachte Stiel durch die vorstehend beschriebenen Merkmale gekennzeichnet ist.

Die Hartbonbon-Hüllmasse des erfindungsgemäßen Lutschers wird im Wesentlichen nach grundsätzlich bekannten Verfahren zur Herstellung von Hartkaramellen, wie z.B. in "Süßwarentechnologie, Fachbereich Zuckerwaren 2013; ZDS-Solingen" definiert, durch Einkochen einer Zucker- oder Zuckeraustauschstoffbasierten Lösung bis auf einen Restwassergehalt von 1-3% ggf. unter Zugabe verschiedenartiger Aromastoffe, Fruchtsäuren und/oder wertbestimmender Zusätze wie Milch, Honig, Malz o.a., sowie ggf. durch Einrühren des Glycerins hergestellt. Die so erhältliche feste Lutscherhülle bildet ähnlich wie übliche Hartkaramellen eine hochkonzentrierte, amorph-glasartig erstarrte Schmelze von Zuckerarten unterschiedlichen Molekulargewichtes, die ihre Form in flüssigem oder plastischem Zustand erhalten. Sie zeichnen sich durch ein glasartiges Gefüge mit splittrigem Bruch aus und haben aufgrund ihres sehr niedrigen Wasserdampfdruckes eine sehr niedrige Gleichgewichtsfeuchte (GF-Wert=<30%) und sind daher sehr hygroskopisch.

Grundsätzlich ist es möglich, zur Herstellung eines sogenannten zuckerfreien Lutschers, die verwertbaren Kohlenhydrate (Zucker) durch Zuckeraustauschstoffe zu ersetzen. Dabei ist die länderspezifische Gesetzgebung zur Zulassung von Zuckeraustauschstoffen zu beachten. So müssen Produkte die mehr als 9,9% Zuckeralkohole als Zuckeraustauschstoffe enthalten in Europa mit einem Warnhinweis auf deren laxierende Wirkung versehen werden.

Bevorzugt erfolgt in dem erfindungsgemäßen Verfahren wie hierin beschrieben die Herstellung der Hartbonbon-Hüllmasse in Schritt (1-1) durch Herstellung einer Schmelze mindestens eines Zuckers, Zuckeraustauschstoffs, zuckerähnlichen Stoffs oder einer Mischung davon.

Die Kaschiermasse aus Schritt (1-2) enthält in einer bevorzugten Variante zur Herstellung einer alkohol-haltigen Lutscherhülle eine Mischung aus Ethanol oder einer alkoholischen Flüssigkeit in einer geeigneten Trägermatrix. Geeignete Materialien der Trägermatrix der Kaschiermasse umfassen Zucker, Zuckeraustauschstoffe, zuckerähnliche Stoffe, Verdickungs- und Bindemittel, Hydrokolloide, jeweils wie hierin definiert, oder Mischungen davon.

Darin wird die Kaschiermasse bevorzugt durch Einmischen oder Einrühren bzw. Vermischen oder Verrühren des flüssigen Ethanols oder der alkoholhaltigen Flüssigkeit in das bzw. mit dem Material der Trägermatrix erhalten.

Bevorzugt wird das Material der Trägermatrix ausgewählt aus einem festen oder pulverförmig vorliegenden Zucker, Zuckeraustauschstoff, zuckerähnlichen Stoff, Verdickungsmittel oder Mischungen davon. Pulverförmig bezeichnet dabei bevorzugt ein feines Schüttgut mit einer Teilchengröße bis zu etwa 1 mm und umfasst Pulver, Puder und Stäube sowie kristallines partikuläres Schüttgut.

Es ist somit erfindungsgemäß bevorzugt, dass in dem hierin beschrieben Verfahren, in Schritt (1-2) Ethanol oder eine alkoholische Flüssigkeit in den mindestens einen Zucker, Zuckeraustauschstoff, zuckerähnlichen Stoff, sowie das gegebenenfalls mindestens eine Verdickungsmittel aus der Gruppe der Cellulosen oder Hydrokolloidgele, die jeweils in fester oder pulverförmiger Form vorliegen, eingemischt wird.

Dabei wird der Alkohol in flüssiger Form mit dem Material der Trägermatrix der Kaschiermasse durch intensives Verrühren vermischt, so dass der Alkohol in der Trägermatrix im Wesentlichen homogen verteilt und gebunden vorliegt.

In den erfindungsgemäßen Verfahren, die unter Verwendung einer Kaschiermasse gemäß Schritt (1-2) durchgeführt werden, ist es bevorzugt, dass die Kaschiermasse eine Temperatur von < 40 °C, bevorzugter, < 30 °C, bevorzugter Raumtemperatur ((20 °C ±5 °C)) aufweist.

Außerdem ist es insbesondere in den Ausführungsformen mit alkoholhaltiger Lutscherhülle (erhältlich durch Verarbeitung einer Ethanol oder alkoholhaltigen Kaschiermasse) bevorzugt, dass die Verarbeitungstemperatur der plastischen Zuckermassen in den Schritten (2-1), (2), (3), (4), (5) und (6) < 90 °C, bevorzugt < 85 °C, bevorzugter maximal 70 °C (≤ 70 °C), noch bevorzugt < 70 °C beträgt.

Der Begriff Zucker (Saccharide) umfasst im Sinne der vorliegenden Erfindung süß schmeckende wasserlösliche Mono-, Di- und Oligosaccharide wie insbesondere Glukose, Fruktose, Dextrose, Galaktose, Laktose, Saccharose und Maltose.

Zuckeraustauschstoffe im Sinne der vorliegenden Erfindungen umfassen gemäß der Definition nach "Süßwarentechnologie, Fachbereich Zuckerwaren 2013; ZDS-Solingen" Polyole, auch Zuckeralkohole oder Polyalkohole genannt, wobei es sich um Verbindungen handelt, die süß schmecken, aber nicht die für Zucker (Saccharide) typischen Reaktionen zeigen. Man gewinnt sie aus Mono- und Disacchariden, sowie aus den Stärkeverzuckerungsprodukten durch Reduktion der Carboxylgruppe. Beispiele für Zuckeraustauschstoffe umfassen Sorbit (Sorbitol), Xylit (Xylitol), Maltit (Maltitol), Mannit (Mannitol), Isomalt, Erythrit, Lactit (Lactitol).

Der Begriff Isomalt im Sinne der vorliegenden Erfindung umfasst einen Zuckeraustauschstoff. Isomalt wird durch katalytische Hydrierung von Isomaltose (Palatinose) gewonnen und ist eine Mischung aus α-d-Glucopyranosido-1,6-sorbit und α-d-Glucopyranosido-1,6-mannit. Isomalt wird kommerziell auch unter der Markenbezeichnung Palatinit® vertrieben.

Sorbit oder Sorbitol ist ein Zuckeraustauschstoff aus der Gruppe der Zuckeralkohole und ist die reduzierte Polyolform der Hexosen Glukose, Fruktose und Sorbose und kann aus diesen durch katalytische oder elektrochemische Hydrierung hergestellt werden.

Zuckerähnliche Stoffe im Sinne der vorliegenden Erfindung umfassen zuckerähnliche Abbauprodukte der Stärke, egal ob es sich um Weizen-, Mais- oder Reisstärke oder auch Tapiokastärke handelt, die eine Kettenlänge der Dextrose-Moleküle, entsprechend der Oligosaccharid-Kettenlänge oder höher besitzen. Beispiele umfassen Dextrine, Maltodextrine und Polydextrine, wie z.B. Maltodextrine auf Basis von Tapiokastärke. Zuckerähnliche Stoffe im Sinne der vorliegenden Erfindung umfassen außerdem Polydextrose sowie Zuckerester.

Der Begriff Polydextrose im Sinne der vorliegenden Erfindung bezeichnet eine langkettige zuckerähnliche synthetische Verbindung aus Glukose, Sorbit und Zitronensäure und ist in der EU als Lebensmittelzusatzstoff unter der Bezeichnung E 1200 zugelassen.

Der Begriff Zuckerester bezeichnet Ester von anorganischen oder organischen Säuren mit Sacchariden, die zur Verwendung in Lebensmitteln vorzugsweise aus Saccharose (einfacher Haushaltszucker) und bestimmten Fettsäuren (u. a. Stearin-, Palmitinsäure) hergestellt werden.

Bevorzugt sind die Zucker, Zuckeraustauschstoffe und zuckerähnlichen Stoffe der Hartbonbon-Hüllmasse aus Schritt (1-1) und/oder der Kaschiermasse aus Schritt (1-2) ausgewählt aus der Gruppe, bestehend aus Glukose, Fruktose, Dextrose, Galaktose, Laktose, Saccharose, Maltose, Sorbit, Xylit, Maltit, Mannit, Isomalt, Erythrit, Lactit, Dextrinen, Maltodextrinen, Polydextrinen, Polydextrose und Mischungen davon. Bevorzugt sind Glukose, Isomalt, Maltit, Sorbit, Dextrin und Polydextrose sowie Maltodextrin (insbesondere auf Basis von Tapiokastärke).

Die Hartbonbon-Hüllmasse aus Schritt (1-1) der erfindungsgemäßen Lutscher enthält dabei bevorzugt Isomalt oder Sorbit oder Mischungen davon. Außerdem kann in einer weiteren Ausführungsform die Hartbonbon-Hüllmasse aus Schritt (1-1) außerdem Polydextrose und/ oder Zuckerester enthalten.

Insbesondere in Ausführungsformen erfindungsgemäßer Lutscher mit fester alkoholhaltiger Lutscherhülle basiert die Hartbonbon-Hüllmasse aus Schritt (1-1) im Wesentlichen auf mindestens einem Zuckeraustauschstoff aus der Gruppe der Polyole.

Darin es weiter bevorzugt, daß das mindestens eine Polyol ausgewählt ist aus Isomalt, Maltitol, Mannitol, Sorbitol, und Xylitol, wobei Isomalt ganz besonders bevorzugt ist.

Bei einer besonders bevorzugten Ausführungsform eines erfindungsgemäßen Lutschers mit alkoholhaltiger fester Lutscherhülle besteht die besondere Problematik darin, daß beim Auftragen der alkoholhaltigen Kaschiermasse in Schritt (2-2) auf die warme Hartbonbon-Hüllmasse aus Schritt (2-1) der Alkohol verdampft und dabei durch die Verdampfungstemperatur die Oberfläche der warmen Hartbonbon-Hüllmasse abkühlt und sich dabei verfestigt, erstarrt bzw. (zumindest partiell) kristallisiert. Um in den nachfolgenden Formungs- und Prägeschritten verarbeitbar zu sein, muss die Hartbonbon-Hüllmasse jedoch eine ausreichende (und homogene) Plastizität und Formbarkeit aufweisen, damit die Kaschiermasse darin dicht und leckfrei eingeschlossen werden kann. Übliche Zuckerschmelzen für Hartbonbon-Hüllmassen benötigen hierfür eine Verarbeitungstemperatur von ca. 75 bis 78 °C. Der Siedetemperatur von Ethanol liegt bei 78 °C, so dass dieser bei derartigen Verarbeitungstemperaturen wie beschrieben verdampft. Es stellt so eine besondere Herausforderung dar, für derartige Ausführungsformen einen geeigneten Kompromiss bzw. ein Gleichgewicht zwischen möglichst niedriger Verarbeitungstemperatur der Hartbonbon-Hüllmasse zur Vermeidung der Alkoholverdampfung mit gleichzeitigem Erhalt einer ausreichenden Viskosität bzw. Plastizität zur Formbarkeit der Zuckerstränge einzustellen. Der erfindungsgemäß bevorzugte Zuckeraustauschstoff der Hartbonbon-Hüllmasse für derartige Ausführungsformen ist Isomalt. Isomalt beispielsweise ist bereits ab einer Verarbeitungstemperatur von 65 °C so brüchig, dass keine stabilen Zuckerstränge mehr damit hergestellt werden können. Der Erfinder der vorliegenden Erfindung hat überraschenderweise gefunden, dass durch die oben beschriebene Zugabe von Glycerin zu der Zuckermasse der Hartbonbon-Hüllmasse in Schritt (1-1), z.B. insbesondere zu einer Zuckermasse auf Basis von Isomalt, die Verarbeitungstemperatur der Hartbonbon-Hüllmasse auf ≤ 70 °C, insbesondere auf < 70 °C abgesenkt werden, ohne dass damit ein Verlust der Plastizität und Formbarkeit der Hüllmasse und der daraus hergestellten Zuckerstränge einhergeht. Z.B. eine bevorzugte Hartbonbon-Hüllmasse auf Basis von Isomalt kann durch die Glycerinzugabe auch bei niedrigen Temperaturen < 70 °C, bei denen die Isomalt-Masse ohne Glycerin bereits brüchig und fest wird, gut verarbeitet werden und der in der darauf ausgebrachten Kaschiermasse enthaltene Alkohol verdampft durch die deutlich verringerte Verarbeitungstemperatur nicht mehr.

Es ist in dem erfindungsgemäßen Verfahren wie hierin beschrieben, bevorzugt, dass die Hartbonbon-Hüllmasse aus Schritt (1-1) im Verfahrensschritt (2) eine Viskosität aufweist, bei der kein Auskristallisieren der Zuckermasse auftritt und die eine gute Plastizität und Verformbarkeit aufweist, um damit homogene und stabile Zuckerstränge herstellen zu können.

Die Materialien der Trägermatrix der Kaschiermasse aus Schritt (1-2) der erfindungsgemäßen Lutscher sind bevorzugt Zucker, Zuckeraustauschstoffe oder zuckerähnliche Stoffe die ausgewählt sind aus der Gruppe umfassend Maltitol, Sorbitol, Isomalt, Dextrin, Maltodextrin (insbesondere auf Basis von Tapiokastärke), Polydextrose und Mischungen davon; Verdickungs- und Bindemittel die ausgewählt sind aus der Gruppe wie unten definiert, bevorzugt aus der Gruppe umfassend Cellulosen, wie mikrokristalline Cellulose, Methyl-, Ethyl-, Hydroxypropyl-, Hydroxypropylmethyl-, Methylethyl-, Carboxymethyl, Natriumcarboxymethylcellulose und Celluloseether; Verdickungsmittel aus der Gruppe der Hydrokolloide wie hierin definiert, bevorzugt aus der Gruppe umfassend Xanthan, Johannisbrotkernmehl; oder jeweils Mischungen davon. Bevorzugt enthält die Trägermatrix der Kaschiermasse aus Schritt (1-2) mindestens einen Bestandteil aus der Gruppe der Zucker, Zuckeraustauschstoffe und zuckerähnlichen Stoffe wie hierin definiert, was sich vorteilhaft auf die Geschmacksgebung der Lutscher auswirkt.

Bevorzugt ist, dass das mindestens eine feste oder pulverförmige Verdickungsmittel aus der Gruppe der Cellulosen, das in Schritt (1-2) eingesetzt werden kann, ausgewählt ist aus mikrokristalliner Cellulose, Methyl-, Ethyl-, Hydroxypropyl-, Hydroxypropylmethyl-, Methylethyl-, Carboxymethyl, Natriumcarboxymethylcellulose oder Celluloseether, wobei Hydroxypropylcellulose besonders bevorzugt ist.

Die Zucker, Zuckeraustauschstoffe und/oder zuckerähnlichen Stoffe können grundsätzlich in granulärer, kristalliner, pulverisierter, geschmolzener bzw. verflüssigter Form oder Mischungen davon eingesetzt werden. Erfindungsgemäß werden insbesondere zur Herstellung der Kaschiermasse aus Schritt (1-2) die Zucker, Zuckeraustauschstoffe und/oder zuckerähnlichen Stoffe in granulärer, kristalliner Form oder in Form eines Pulvers (wie vorstehend definiert) eingesetzt.

Der Anteil des mindestens einen Zuckers, Zuckeraustauschstoffs, zuckerähnlichen Stoffs oder der Mischung davon in der Hartbonbon-Hüllmasse aus Schritt (1-1) beträgt bevorzugt 65 bis 100 Gew.-%, bevorzugter von 90 bis 99 Gew.-%, noch bevorzugter von 93 bis 96 Gew.-%, jeweils bezogen auf die gesamte Hartbonbon-Hüllmasse aus Schritt (1-1) in dem erfindungsgemäßen Lutscher, um insbesondere die Beständigkeit der Lutscherhülle gegenüber dem im Kern enthaltenen Alkohol, alkoholischen und alkoholhaltigen Flüssigkeiten bzw. Füllungen sowie dem gegebenenfalls auch in der Kaschiermasse aus Schritt (1-2) enthaltenen Alkohol zu erreichen.

Der Anteil der Trägermatrix, wie z.B. des mindestens einen Zuckers, Zuckeraustauschstoffs, zuckerähnlichen Stoffs, Verdickungsmittels, Hydrokolloidgels oder der Mischung davon, in der Kaschiermasse aus Schritt (1-2) kann 40 bis < 100 Gew.-%, 50 bis 90 Gew.-%, 60 bis 80 Gew.-%, jeweils bezogen auf die gesamte Kaschiermasse aus Schritt (1-2) in dem erfindungsgemäßen Lutscher betragen, um insbesondere den Alkohol bzw. die alkoholischen Flüssigkeiten darin aufzunehmen und zu binden und für die Verarbeitung zu einem Formkörper im Wesentlichen homogen darin verteilt zu halten. Je nach gewähltem Trägermatrixmaterial kann er jedoch auch deutlich niedriger gewählt werden. Maßgeblich ist eine Menge, die eine geeignete Viskositätseinstellung der Kaschiermasse in Schritt (1-2) ermöglicht.

Der Anteil des Ethanols bzw. der alkoholischen Flüssigkeit in der Kaschiermasse aus Schritt (1-2) kann 0,1 bis 60 Gew.-%, 10 bis 50 Gew.-%, 20 bis 40 Gew.-%, jeweils bezogen auf die gesamte Kaschiermasse aus Schritt (1-2) in dem erfindungsgemäßen Lutscher betragen. Je nach gewähltem Trägermatrixmaterial kann er jedoch auch deutlich höher gewählt werden, beispielsweise im Bereich von 10 bis 98 Gew.-% oder bis zu 95 Gew.-%. Der Alkoholgehalt in der gesamten alkoholhaltigen festen Lutscherhülle kann 0,1 bis 50 Gew.-%, 0,1 bis 40 Gew.-%, 0,1 bis 30 Gew.-%, 0,1 bis 20 Gew.-%, 0,1 bis 10 Gew.-%, 0,1 bis 5 Gew.-%, oder 0,5 bis 50 Gew.-%, 0,5 bis 40 Gew.-%, 0,5 bis 30 Gew.-%, 0,5 bis 20 Gew.-%, 0,5 bis 10 Gew.-%, 0,5 bis 5 Gew.-%, oder 1,0 bis 50 Gew.-%, 1,0 bis 40 Gew.-%, 1,0 bis 30 Gew.-%, 1,0 bis 20 Gew.-%, 1,0 bis 10 Gew.-%, 1,0 bis 5 Gew.-%, jeweils bezogen auf das gesamte Lutscherhüllmaterial (ohne mögliche zusätzliche alkoholische Füllungen im Kern), betragen, um insbesondere beim Verzehr der erfindungsgemäßen Lutscher bereits während des Lutschens der festen Lutscherhülle ein Geschmackserlebnis des Alkoholaromas zu erzeugen.

Bevorzugt wird in dem erfindungsgemäßen Verfahren wie hierin beschrieben in Schritt (4) eine Flüssigkeit oder fließfähige (sirupartige) Füllung verfüllt. Eine derartige flüssige oder fließfähige Füllung enthält vorzugsweise Glukosesirup, Maltitolsirup oder Sorbitol (oder Mischungen davon), was der Füllung einen süßen Geschmack verleiht. Der Glukosesirup-Anteil, Maltitolsirup-Anteil oder der Sorbitol-Anteil einer derartigen flüssigen oder fließfähigen Füllung beträgt vorzugsweise 55 bis 99 Gew.-%, insbesondere 61 bis 96 Gew.-%, jeweils bezogen auf das vollständige Füllmaterial.

Bevorzugt wird in dem erfindungsgemäßen Verfahren wie hierin beschrieben in Schritt (4) Ethanol oder eine alkoholische Flüssigkeit oder fließfähige (sirupartige) alkoholische Füllung verfüllt. Eine derartige alkoholhaltige Füllung enthält neben Glukosesirup, Maltitolsirup und/oder Sorbitol Alkohol, wobei der Alkoholgehalt in einer solchen alkoholhaltigen Füllung in einem Kern des Formkörpers vorzugsweise 2 bis 40 Gew.-%, insbesondere 5 bis 35 Gew.-%, jeweils bezogen auf das vollständige Füllmaterial im Kern, beträgt.

Der Begriff alkoholhaltige (oder alkoholische) Füllung im Sinne der vorliegenden Erfindung umfasst dabei alle Füllungen, insbesondere flüssige, viskose, sirupartige, gelartige und partikelförmige Füllungen, die Alkohol in Form von Ethanol enthalten.

Alkohol umfasst im Sinne der vorliegenden Erfindung Ethanol sowie auf Alkohol basierende Flüssigkeiten und alle alkoholischen Produkte (z.B. alkoholische Getränke oder Getränkezubereitungen) und alkoholischen Grundstoffe, die einen Mindestanteil an Alkohol von 10 Vol.-% oder bis zu 30 Vol.-% und einen Maximalanteil in Höhe von reinem Ethanol enthalten. Insbesondere sind verzehrfähige alkoholhaltige Flüssigkeiten gemeint.

Eine Mischung aus mindestens einem Material der Trägermatrix der Kaschiermasse aus Schritt (1-2) wie vorstehend definiert und Alkohol bezeichnet im Sinne der vorliegenden Erfindung eine Mischung im Sinne eines Gemisches, Gemenges, eines Blends oder Verschnitts. Bevorzugt umfasst eine Mischung aus mindestens einem Material der Trägermatrix wie vorstehend definiert und Alkohol im Sinne der vorliegenden Erfindung nicht eine poröse Struktur des Materials der Trägermatrix, in die der Alkohol eingefüllt ist. Damit ist es insbesondere auch bevorzugt, dass die Mischung aus mindestens einem Material der Trägermatrix wie vorstehend definiert und Alkohol sowie die daraus hergestellte verfestigte Kaschiermasse in der Lutscherhülle nicht porös ist.

In dem erfindungsgemäßen Verfahren kann der Hartbonbon-Hüllmasse aus Schritt (1-1) und/oder der Kaschiermasse aus Schritt (1-2) ein oder mehrere Zusatzstoffe aus der Gruppe bestehend aus Verdickungsmitteln, Aromastoffen, Farbstoffen, Süßstoffen, Säuerungsmitteln, Milchprodukten, färbenden Lebensmitteln und Mischungen davon zugesetzt werden. Auch die flüssige Füllung, insbesondere eine alkoholische Füllung, kann mindestens einen Lebensmittelzusatzstoff, wie vorstehend definiert, enthalten.

Die Anzahl und Auswahl der Lebensmittelzusatzstoffe ergibt sich aus der zu erzeugenden Geschmacksrichtung des Endprodukts und kann in weiten Bereichen variieren und schließt insbesondere die vorstehend definierten Lebensmittelzusatzstoffe ein.

Im Rahmen der vorliegenden Erfindung können Lebensmittelzusatzstoffe der Hartbonbon-Hüllmasse aus Schritt (1-1) und/oder der Kaschiermasse aus Schritt (1-2) ausgewählt werden aus der Gruppe, bestehend aus Verdickungsmitteln, Aromastoffen, Farbstoffen, Süßstoffen, Säuerungsmitteln, Milchprodukten, färbenden Lebensmitteln und Mischungen davon.

Im Rahmen der vorliegenden Erfindung kann der mindestens eine Lebensmittelzusatzstoff der flüssigen oder fließfähigen Füllung im Kern insbesondere ausgewählt werden aus der Gruppe, bestehend aus Aromastoffen, Farbstoffen, insbesondere Titandioxid, Säuerungsmitteln, Milchprodukten, Süßstoffen, Verdickungsmitteln und Mischungen davon.

Falls in einer erfindungsgemäßen Füllung im Kern Milchprodukte enthalten sind, beträgt der Anteil vorzugsweise 0,1 bis 15 Gew.-%, jeweils bezogen auf das vollständige Füllmaterial im Kern.

Falls in einer erfindungsgemäßen Füllung im Kern ein Säuerungsmittel enthalten ist, beträgt der Anteil vorzugsweise 0,1 bis 5 Gew.-%, insbesondere 0,5 bis 3 Gew.-%, jeweils bezogen auf das vollständige Füllmaterial im Kern.

Verdickungsmittel (auch als Dickungsmittel oder Bindemittel bezeichnet) schließen dabei alle lebensmittelrechtlich zugelassenen Verdickungsmittel ein, vorzugsweise werden Verdickungsmittel ausgewählt aus der Gruppe, bestehend aus Alginsäure, Alginaten (Natrium-, Kalium-, Calcium-, Ammonium-, Propylenglycolalginat), Agar-Agar, Carrageen, Johannisbrotkernmehl, Guarkernmehl, Traganth, Gummi arabicum, Xanthan, Karaya, Tarakernmehl, Gellan, Pektine, Cellulosen (mikrokristalline Cellulose, Methyl-, Ethyl-, Hydroxypropyl-, Hydroxypropylmethyl-, Methylethyl-, Carboxymethyl, Natriumcarboxymethylcellulose), Celluloseether, Gelatine, Sago und Stärke. Verdickungsmittel aus der Gruppe der Hydrokolloide umfassen beispielsweise Stärke, Cellulose, Pektine, Gummi Arabicum, Galactomannane, Guarkernmehl, Johannisbrotkernmehl, Agar-Agar, Carrageen, Alginate, Gelatine, Xanthan und Dextrane. Bevorzugt wird das Verdickungsmittel ausgewählt aus der Gruppe umfassend Xanthan, Johannisbrotkernmehl, Carboxymethylcellulose wie Natriumcarboxymethylcellulose, Hydroxypropylcellulose sowie Celluloseether. Bevorzugte Verdickungsmittel für die Trägermatrix der Komponente (b) werden ausgewählt aus der Gruppe umfassend Xanthan, Johannisbrotkernmehl, Carboxymethylcellulose wie Natriumcarboxymethylcellulose, Hydroxypropylcellulose, Celluloseether oder Mischungen hiervon. Bevorzugt werden darin Cellulosen in fester Form oder pulverförmig verwendet. Bevorzugte Hydrokolloidgele der Trägermatrix in der Komponente (b) umfassen Gele von Xanthan oder Johannisbrotkernmehl.

Säuerungsmittel schließen dabei alle lebensmittelrechtlich zugelassenen Säuerungsmittel ein, vorzugsweise werden Säuerungsmittel ausgewählt aus der Gruppe, bestehend aus Apfelsäure, Weinsäure, Citronensäure und Milchsäure, insbesondere Milchsäure.

Süßstoffe schließen dabei alle lebensmittelrechtlich zugelassenen Süßungsmittel ein wie Acesulfam, Aspartam, Aspartam-Acesulfam-Salz, Cyclamat, Neohesperidin, Neotam, Saccharin, Sucralose, Steviosid (Stevia), Thaumatin, vorzugsweise werden Süßungsmittel ausgewählt aus der Gruppe bestehend aus Aspartam, Acesulfam, Saccharin und Stevia.

Milchprodukte schließen dabei alle lebensmittelrechtlich zugelassenen Milchprodukte ein, vorzugsweise werden Milchprodukte ausgewählt aus der Gruppe, bestehend aus Milch (sowie Produkte aus Milch und Milchbestandteilen), Kondensmilch, Schlagsahne und Milchpulver.

Ein weiterer bevorzugter Bestandteil des erfindungsgemäßen Lutschers ist Wasser. Das Wasser wird im Allgemeinen zur Herstellung der Hartbonbon-Hüllmasse aus Schritt (1-1) und/oder der Kaschiermasse aus Schritt (1-2) benötigt und kann produktionsbedingt in der daraus hergestellten Lutscherhülle verbleiben, wobei ein Wasser-Anteil im Endprodukt von insgesamt maximal 3 Gew.-%, bezogen auf die feste Lutscherhülle, beträgt. Etwaige wasserhaltige Füllungen bleiben dabei unberücksichtigt. In der Regel ist der Wassergehalt bei der Herstellung höher und wird durch das Einkochen der Komponenten aus Schritt (1-1 und (1-2) bei der Herstellung des Lutschers jeweils reduziert, um die jeweils gewünschte Zähigkeit einzustellen. Die Kaschiermasse aus Schritt (1-2) wird bevorzugt im Wesentlichen wasserfrei gehalten, und zwar sowohl bei der Herstellung der Kaschiermasse in Schritt (1-2), sowie in der festen Lutscherhülle im Endprodukt. Insbesondere weist darin die verfestigte Kaschiermasse bevorzugt einen Wassergehalt von maximal 0,5 Gew.-% auf.

Der Begriff Formkörper im Sinne der vorliegenden Erfindung umfasst alle dreidimensionalen Körper, insbesondere geometrische Körper wie kugelförmige, quaderförmige, würfelförmige, pyramidenförmige, prismaförmige, zylinderförmige, deltaederförmige, kegelförmige, torusförmige, paraboloide und hyperboloide Körper aber auch nicht-geometrische Körper wie ovoidförmige oder fraktale Körper, die aus dem erfindungsgemäßen Lutschermaterial geformt werden. Bevorzugt sind kugelförmige, ovale oder sphärische Formkörper.

Grundsätzlich ist es mit den hierin beschriebenen Verfahren möglich
a) Lutscher mit fester alkoholfreier Lutscherhülle und flüssigem alkoholfreiem Kern,
b) Lutscher mit fester alkoholhaltiger Lutscherhülle und flüssigem alkoholfreiem Kern,
c) Lutscher mit fester alkoholfreier Lutscherhülle und flüssigem alkoholischem Kern
d) Lutscher mit fester alkoholhaltiger Lutscherhülle und flüssigem alkoholischem Kern
herzustellen. Ausführungsformen gemäß Variante b) und d) sind bevorzugt, besonders bevorzugt sind Ausführungsformen gemäß Variante d).

In den bevorzugten Ausführungsformen eines Lutschers mit fester alkoholhaltiger Lutscherhülle gemäß oben genannter Variante b) oder d) weist die feste Lutscherhülle, die aus einer alkoholfreien Hartbonbon-Hüllmasse gemäß Schritt (1-1) und einer alkohol-haltigen Kaschiermasse gemäß Schritt (1-2) hergestellt wird, in der Regel die mindestens zwei Komponenten aus verfestigter alkoholfreier Hartbonbon-Hüllmasse und verfestigter oder viskoser alkohol-haltiger Kaschiermasse auf, und worin diese beiden Komponenten in der festen Lutscherhülle mindestens eine Grenzfläche zueinander aufweisen. Die verfestigte oder viskose alkohol-haltige Kaschiermasse, und damit auch der darin enthaltene Alkohol, liegt dabei bevorzugt homogen verteilt in der durch Verbinden der alkoholfreien Hartbonbon-Hüllmasse und der alkohol-haltigen Kaschiermasse miteinander gebildeten festen Lutscherhülle vor.

Dabei kann die feste Lutscherhülle außerdem dadurch gekennzeichnet sein, dass diese beiden Komponenten jeweils fest sind und zusammen eine massive feste Lutscherhülle bilden. Bevorzugt ist die insgesamt feste Lutscherhülle dadurch gekennzeichnet, dass die Komponente der alkoholfreien Hartbonbon-Hüllmasse fest und die alkohol-haltige Kaschiermasse halbfest, pastös oder viskos ist und homogen verteilt in der durch die beiden Komponenten gebildeten Lutscherhülle vorliegt, wobei die durch die beiden Komponenten gebildete Lutscherhülle eine insgesamt massive feste Lutscherhülle darstellt. Dabei zeichnet sich insbesondere die verfestigte oder viskose Kaschiermasse in der Lutscherhülle dadurch aus, dass in einer geeigneten Trägermatrix, wie vorstehend definiert, Alkohol homogen verteilt vorliegt und diese Komponente so in der verfestigten Hartbonbon-Hüllmasse aus Schritt (1-1) eingebettet ist, dass ein insgesamt massives und festes Lutscherhüllmaterial mit homogener Verteilung des Alkohols in der festen Lutscherhülle vorliegt. Aus dieser festen Lutscherhülle wird dann der darin verteilte Alkohol beim Verzehr (Auflösen, Lutschen des Lutschers) der Alkohol über die nahezu gesamte Verzehrszeit nach und nach freigesetzt. Der im Kern gegebenenfalls enthaltenen Alkohol wird hingegen erst freigesetzt, wenn die feste Hülle durch das Lutschen weitgenug aufgelöst wurde, so dass der darin eingeschlossene Alkohol entweichen kann. Das damit zusätzliche alkoholische Geschmackserlebnis erfolgt dann sehr intensiv und schlagartig und für eine gegenüber dem Lutschvorgang deutlich verkürzte Zeitperiode, da die alkoholische Füllung direkt vollständig freigesetzt und verzehrt wird.

Im Sinne der vorliegenden Erfindung bezeichnet "fest" im Zusammenhang mit den Lutscher-Hüllmaterialien (umfassend die Zuckerstränge als Zwischenerzeugnisse sowie den fertigen Lutscher) - im Gegensatz zu der flüssigen Füllung - einen festen Aggregatzustand bei Raumtemperatur und bis zu der bevorzugten Verarbeitungstemperatur. Insbesondere sind die Lutscher-Hüllmaterialien bzw. die Lutscher bei Raumtemperatur (20 °C ±5 °C) fest (insbesondere nicht fließfähig). Fest bezeichnet darin auch bei Raumtemperatur oder bis zu der bevorzugten Verarbeitungstemperatur formstabile, elastische Zustände, wie sie z.B. Weichkaramellen und Kaubonbons aufweisen. Beispielsweise kann fest einen Zustand mit einem Elastizitätsmodul > 300 Pa, bevorzugt > 400 Pa bezeichnen.

Mit dem hierin beschriebenen Verfahren erhältliche bevorzugte Ausführungsformen mit alkohol-haltiger Lutscherhülle gemäß Variante b) oder d) weisen in der Regel zumindest zwei Komponenten auf, eine aus alkoholfreier Hartbonbon-Hüllmasse und eine aus alkohol-haltiger Kaschiermasse, die herstellungsbedingt in zwei oder mehr, bevorzugt drei oder mehr im Wesentlichen einander abwechselnden oder aufeinanderfolgenden Schichten vorliegen.

Damit sich der in der verfestigten Kaschiermasse enthaltene Alkohol nicht zu schnell bzw. so wenig wie möglich bis zu gar nicht bei der Herstellung, Konfektionierung und/oder Lagerung verflüchtigt, ist es bevorzugt, dass die Lutscher an ihren Außenseiten die alkoholfreie Hartbonbon-Hüllmasse gemäß Schritt (1-1) bzw. (2-1) aufweisen. Bei einer erfindungsgemäß bevorzugten zwei-, drei- oder mehrschichtigen Lutscherhülle ist damit bevorzugt die äußerste Schicht aus der alkoholfreien Hartbonbon-Hüllmasse gebildet.

Die innerste Schicht, die die Grenzfläche zur flüssigen oder fließfähigen Füllung bildet, ist bevorzugt ebenfalls aus der alkoholfreien Hartbonbon-Hüllmasse gebildet, insbesondere wenn eine alkoholische Füllung verfüllt wird.

Es ist auch möglich, dass die beiden Komponenten die alkoholfreie Hartbonbon-Hüllmasse und alkohol-haltige Kaschiermasse in der festen Lutscherhülle zusammen ein massives Komprimat bilden, in dem der Alkohol im Wesentlichen homogen verteilt vorliegt ohne dass einzelne Schichten oder Grenzflächen zwischen den beiden Komponenten sichtbar sind. Derartige Komprimate können ebenfalls als feste Lutscherhüllmasse zur Bildung der Formkörper ausgebildet werden.

Bevorzugt besteht die alkoholfreie Hartbonbon-Hüllmasse der Lutscherhülle zu einem überwiegenden Anteil aus dem mindestens einen Zucker, Zuckeraustauschstoff, zuckerähnlichen Stoff oder den Mischungen davon und Glycerin, wobei übliche lebensmittelrechtlich zugelassene Hilfs- und Zusatzstoffe, wie z.B. die vorstehend genannten zugesetzt sein können. Bevorzugt werden Milchprodukte wie vorstehend definiert zugesetzt.

Bevorzugt besteht die alkohol-haltige Kaschiermasse zu einem überwiegenden Anteil aus dem Material der Trägermatrix wie dem mindestens einen Zucker, Zuckeraustauschstoff, zuckerähnlichen Stoff, Verdickungsmittel oder Hydrokolloidgel oder den Mischungen davon, wobei übliche lebensmittelrechtlich zugelassene Hilfs- und Zusatzstoffe, wie z.B. die vorstehend genannten zugesetzt sein können.

In dem erfindungsgemäßen Verfahren werden in Schritt (1) zur Herstellung der Hartbonbon-Hüllmasse zunächst der mindestens eine Zucker, Zuckeraustauschstoff, zuckerähnliche Stoff oder Mischungen davon und Wasser im Gew.-%-Verhältnis von im Allgemeinen 75:25 (Zucker / Zuckeraustauschstoff / zuckerähnlicher Stoff: Wasser) bis 99:1, insbesondere im Gew.-%-Verhältnis von 90:10 bis 99,5:0,5, in einem Satzkocher oder in einem Koch-Rührwerk bei Temperaturen zwischen 150 °C und 170 °C, beispielsweise bei 170 °C gekocht. Parallel oder im Anschluss wird ein Vakuum zur Herabsetzung des Wassergehaltes angelegt.

Danach wird das Vakuum belüftet und an dieser Stelle wird das Glycerin eingerührt. Anschließend werden an dieser Stelle die für das jeweilige Endprodukt gegebenenfalls gewünschten zusätzlichen Lebensmittelzusatzstoffe hinzugegeben und in einem Aromamischgerät, z. B. von Ruffinatti®, oder manuell vermengt.

Bevorzugt liegt die Masse der alkoholfreien Hartbonbon-Hüllmasse aus Schritt (1-1) in Form einer Schmelze (z. B. Zuckerschmelze) des mindestens einen Zuckers, Zuckeraustauschstoffs, zuckerähnlichen Stoffs oder der Mischung davon vor.

Zur Einarbeitung der Kaschiermasse in die Lutscherhülle werden in Schritt (1-2) zur Herstellung der Kaschiermasse zunächst die Materialien der Trägermatrix, wie vorstehend definiert, wie bevorzugt der mindestens eine jeweils pulverförmige Zucker, Zuckeraustauschstoff, zuckerähnliche Stoff, das pulverförmige Verdickungsmittel, das Hydrokolloidgel oder Mischungen davon, mit gegebenenfalls für das jeweilige Endprodukt gewünschten Lebensmittelzusatzstoffen, insbesondere z.B. mit einem Verdickungsmittel wie bevorzugt Xanthan, vermischt und - sofern erwünscht - mit dem Alkohol (Ethanol oder eine alkoholische Flüssigkeit) unter intensivem Verrühren homogen vermischt.

Bevorzugt erfolgt in Schritt (1-2) die Herstellung der Kaschiermasse durch Einmischen des Ethanols oder der alkoholischen Flüssigkeit in ein festes oder pulverförmiges Material der Trägermatrix, welches ausgewählt ist aus der Gruppe umfassend feste oder pulverförmige Zucker, Zuckeraustauschstoffe oder zuckerähnliche Stoffe, wie vorstehend definiert, feste oder pulverförmige Verdickungsmittel aus der Gruppe der Cellulosen, insbesondere Hydroxypropylcellulose und Natriumcarboxymethylcellulose, sowie Celluloseether und Mischungen davon.

Zusätzlich oder statt der Alkoholzugabe können an dieser Stelle auch gegebenenfalls erwünschte Lebensmittelzusatzstoffe wie oben definiert in die Kaschiermasse eingemischt werden - je nach dem welches Geschmackserlebnis gewünscht wird.

In Schritt (2) erfolgt die Herstellung eines kontinuierlichen Zuckerstrangs zur Bildung der Lutscherhülle. Dazu wird in Schritt (2-1) die Hartbonbon-Hüllmasse aus Schritt (1-1) in einer kontinuierlichen Schicht ausgebracht und auf eine Temperatur im Bereich von 30 °C bis < 90 °C, bevorzugt < 85 °C, bevorzugter auf eine Verarbeitungstemperatur von maximal 70 °C (≤ 70 °C), bevorzugter < 70 °C temperiert.

Zur Herstellung eines ungefüllten Zuckerstrangs (ohne Kaschiermasse) wird die Hartbonbon-Hüllmassenschicht eingerollt, gefaltet oder eingeklappt und zu einem ungefüllten Zuckerstrang geformt.

Zur Herstellung eines gefüllten Zuckerstrangs (mit Kaschiermasse) wird in gleicher Weise zunächst eine kontinuierliche temperierte Hartbonbon-Hüllmassenschicht, wie in Schritt (2-1) beschrieben, hergestellt und in einem Schritt (2-2) darauf die Kaschiermasse aus Schritt (1-2) gleichmäßig aufgebracht. Die Kaschiermasse wird anschließend in der temperierten und damit fließfähigen bzw. plastischen oder formbaren Hartbonbon-Hüllmasse aus Schritt (2-1) eingebettet oder eingeschlossen.

Dabei kann das Einschließen der Kaschiermasse grundsätzlich erfolgen, indem insbesondere ein drei- oder mehrschichtiger Zuckerstrang (gefüllter Zuckerstrang) hergestellt werden. Darin wird zunächst die viskose, modellierbare, zähplastische, streich- oder fließfähige Hartbonbon-Hüllmasse aus Schritt (1-1) flächig ausgestrichen oder ausgegossen und darauf eine Schicht der viskosen, modellierbaren, zähplastischen, streich- oder fließfähigen Kaschiermasse aus Schritt (1-2) durch Ausstreichen oder Aufgießen aufgebracht. Das Herstellen der Schichten der Hartbonbon-Hüllmasse und der Kaschiermasse kann durch herkömmliche Verfahren wie Gießen, Ausstreichen, Rakeln, Aufsprühen etc. erfolgen. Bevorzugt kann das Aufbringen der Schichten aufeinander bei einer Verarbeitungstemperatur von ca. 70 bis 85 °C, bevorzugter 70 bis 75 °C erfolgen, da die Hartbonbon-Hüllmasse aus Schritt (1-1) und die Kaschiermasse aus Schritt (1-2) bei dieser Temperatur eine optimale Verarbeitungsplastizität und geeignete Viskosität aufweisen. In einer besonders bevorzugten Ausführungsform wie oben beschrieben wird eine Verarbeitungstemperatur < 70 °C gewählt.

In einer Verfahrensvariante erfolgt das Einbetten der Kaschiermasse durch Aufbringen der viskosen, modellierbaren, zähplastischen, streich- oder fließfähigen Kaschiermasse aus Schritt (1-2) auf einer Schicht der viskosen, modellierbaren, zähplastischen, streich- oder fließfähigen Masse der Hartbonbon-Hüllmasse aus Schritt (1-1) und Aufbringen mindestens einer weiteren Schicht der viskosen, modellierbaren, zähplastischen, streich- oder fließfähigen Masse der Hartbonbon-Hüllmasse auf der Schicht der Kaschiermasse, sowie gegebenenfalls gefolgt vom Aufbringen weiterer Schichten der Kaschiermasse und der Hartbonbon-Hüllmasse, wobei die äußersten Schichten des so gebildeten Hüllmaterials aus der Hartbonbon-Hüllmasse gebildet werden.

Dadurch wird die Schicht der Kaschiermasse von zwei Schichten der Hartbonbon-Hüllmasse eingeschlossen. Durch das anschließende Aufbringen weiterer einander abwechselnder Schichten der Kaschiermasse und der Hartbonbon-Hüllmasse können im Grunde beliebig viele weitere Schichten Kaschiermasse und Hartbonbon-Hüllmasse in abwechselnder Reihenfolge in gleicher Weise erhalten werden, sodass ein mehrschichtiges Hüllmaterial mit einander abwechselnden Schichten entsteht, wobei die Abschlussschicht bevorzugt aus einer Schicht der Hartbonbon-Hüllmasse gebildet wird, so dass bevorzugt die jeweils äußersten Schichten aus der Hartbonbon-Hüllmasse gebildet sind.

In einer weiteren Verfahrensvariante erfolgt das Einbetten der Kaschiermasse durch Aufbringen der viskosen, modellierbaren, zähplastischen, streich- oder fließfähigen Kaschiermasse aus Schritt (1-2) auf einer Schicht der viskosen, modellierbaren, zähplastischen, streich- oder fließfähigen Masse der Hartbonbon-Hüllmasse aus Schritt (1-1) und Einrollen des so gebildeten schichtförmigen Hüllmaterials, wobei die äußerste Schicht der so gebildeten mehrschichtigen Rolle aus der Hartbonbon-Hüllmasse gebildet ist.

Darin wird beispielsweise ein zunächst hergestelltes zweischichtiges Schichtmaterial umfassend eine Schicht Hartbonbon-Hüllmasse und eine Schicht Kaschiermasse eingerollt, so dass eine Art mehrschichtige Schnecke gebildet wird. Das Einrollen der zwei aufeinanderliegenden Schichten erfolgt dabei so, dass die Schicht der Hartbonbon-Hüllmasse über die darauf aufliegende Schicht der Kaschiermasse eingerollt wird und dadurch die äußerste Schicht der so gebildeten Rolle oder Schnecke aus der Hartbonbon-Hüllmasse gebildet ist. Grundsätzlich ist es auch möglich, zunächst ein drei- oder mehrschichtiges Hüllmaterial herzustellen (beispielweise wie in der vorstehenden Variante beschrieben), und dieses drei- oder mehrschichtige Schichtmaterial entsprechend einzurollen. Dabei ist es möglich, das Einrollen über einen Stab oder ein Rohr oder ein entsprechend geeignetes Werkstück auszuführen, so daß ein Hohlraum innerhalb der Schnecke entsteht, in den dann die flüssige oder fließfähige Füllung verfüllt wird.

In einer weiteren Verfahrensvariante erfolgt das Einbetten der Kaschiermasse durch Aufbringen der viskosen, modellierbaren, zähplastischen, streich- oder fließfähigen Kaschiermasse auf einer Schicht der viskosen, modellierbaren, zähplastischen, streich- oder fließfähigen Hartbonbon-Hüllmasse und Falten des so gebildeten schichtförmigen Hüllmaterials, derart dass ein mehrschichtiges Hüllmaterial gebildet wird, wobei die äußerste Schicht des so gebildeten Hüllmaterials aus der Hartbonbon-Hüllmasse gebildet wird.

Darin wird beispielsweise ein zunächst hergestelltes zweischichtiges Schichtmaterial umfassend eine Schicht Hartbonbon-Hüllmasse und eine Schicht Kaschiermasse ein oder mehrmals übereinander gefaltet, so dass ein flächiges, mehrschichtiges Hüllmaterial gebildet wird. Das Falten des zweischichtigen Schichtmaterials kann durch Anwendung bekannter Falttechniken, wie beispielsweise aus der Herstellung von Blätterteigen oder für Croissants bekannt, erfolgen. Das Falten wird dabei so durchgeführt, dass die Schicht der Hartbonbon-Hüllmasse über der darauf aufliegenden Schicht der Kaschiermasse zu liegen kommt und dadurch die jeweils äußersten Schichten des so gebildeten Hüllmaterials aus der Hartbonbon-Hüllmasse gebildet sind. Grundsätzlich ist es auch möglich, zunächst ein drei- oder mehrschichtiges Hüllmaterial herzustellen (beispielweise wie in der vorstehenden Variante beschrieben), und dieses drei- oder mehrschichtige Schichtmaterial entsprechend zu falten. Dabei ist es möglich, das Falten über einen Stab oder ein Rohr oder ein entsprechend geeignetes Werkstück auszuführen, so daß ein Hohlraum innerhalb des gefalteten Hüllmaterials entsteht, in den dann die flüssige oder fließfähige Füllung verfüllt wird.

Grundsätzlich kann das Einschließen oder Einbetten der Kaschiermasse in die Hartbonbon-Hüllmasse durch bekannte Verfahren zur Herstellung von Hartkaramellen und Lutschern erfolgen. Insbesondere können in den erfindungsgemäß bevorzugten kontinuierlichen Herstellverfahren die auf die beschriebene Weise hergestellten gefüllten und ungefüllten Zuckerstränge aus den viskosen, modellierbaren, zähplastischen, streich- oder fließfähigen Hartbonbon-Hüll- und Kaschiermassen in einem Schritt (3) Kegelrollern, Egalisierrollen oder Extrudern zugeführt werden und darin miteinander verdrillt oder verknetet werden und zu einem verjüngten (reduziertem) Zuckerstrang geformt werden. Die Ausformung des Zuckerstrangs in Schritt (2) erfolgt bevorzugt bei Temperaturen zwischen 55 und 65 °C. Die Formung des verjüngten Zuckerstrangs in Schritt (3) erfolgt bevorzugt bei Temperaturen zwischen 40 und 45 °C.

In Schritt (4) erfolgt die kontinuierliche Befüllung des verjüngten Zuckerstrangs mit einer flüssigen oder fließfähigen Füllung über ein am Austritt des Kegelrollers oder Extruders angeordneten Befüllungsrohrs unter Erhalt eines flüssig verfüllten Zuckerstrangs.

Dabei wird zur Herstellung einer Füllmasse für den Kern der Füllungsgrundstoff, z.B. Glukosesirup, Maltitolsirup oder Sorbitol, gegebenenfalls unter Zusatz weiterer Zusatzstoffe, insbesondere Verdickungsmittel wie vorstehend definiert, zunächst bei Temperaturen zwischen 100 °C und 130 °C, beispielsweise bei 120 °C in einem Satzkocher oder einem Koch-Rührwerk gekocht. Dadurch wird der Wasser-Anteil der Füllmasse reguliert und die Zähigkeit der Füllmasse eingestellt. Je geringer der Wasser-Anteil ist, desto zäher ist die Füllmasse.

Wenn die Füllmasse für den Kern Milchprodukte enthält, werden diese zunächst mit dem Glukosesirup, dem Maltitolsirup und/oder dem Sorbit sowie ggf. mit den weiteren Zusatzstoffen, wie insbesondere Verdickungsmitteln, vermengt und bei Temperaturen zwischen 100 °C und 130 °C, beispielsweise bei 110 °C gekocht.

Anschließend wird die Füllmasse für den Kern auf Temperaturen kleiner als 78 °C abgekühlt und die für das jeweilige Endprodukt benötigten Lebensmittelzusatzstoffe hinzugegeben und vermischt.

Gegebenenfalls wird als letztes zur Füllmasse für den Kern zusätzlich Alkohol (Ethanol oder eine alkoholhaltige Flüssigkeit) hinzugegeben. Die Temperatur ist dabei weiterhin geringer als 78 °C, um das Sieden des Alkohols zu verhindern. Bevorzugt wird die Füllung auf eine Temperatur von etwa 40 bis 50 °C heruntergekühlt.

In Schritt (4) wird die Füllmasse für den Kern beispielsweise durch das Befüllungsrohr im Kegelroller in den hergestellten verjüngten Zuckerstrang gefüllt (gepumpt). Die Füllmasse hat beim Einfüllen in den verjüngten Zuckerstrang eine Temperatur kleiner als 78 °C, bevorzugt 40 bis 50 °C.

Der in Schritt (4) erhaltene flüssig verfüllte Zuckerstrang wird in Schritt (5) zu dem gewünschten erfindungsgemäßen Formkörper geformt. Das Verformen erfolgt nach bekannten Formungsmethoden, wie z.B. Portionieren oder Zuschneiden, vorzugsweise mittels Prägemaschinen. Durch Zuschneiden, Prägen, Drehen oder Quetschen des vorgeformten verfüllten Zuckerstrangs können die gewünschten Formkörper mit flüssiger Füllung erhalten werden. Dieser Vorgang erfolgt bevorzugt unter Kühlung oder gefolgt von Kühlung auf Temperaturen zwischen 20 bis 40 °C.

Durch den Prägevorgang wird der Formkörper verschlossen und die flüssige Füllung darin eingeschlossen.

In Schritt (6) erfolgt das Einbringen (z.B. durch automatisiertes Einschießen oder Eindrücken) eines Stiels in das noch zäh-plastische Lutscher-Hüllmaterial. Durch die spezifische Ankerregion des Stiels wird dieser fest in dem Lutscherhüllmaterial verankert.

Durch Abkühlen des geformten und befüllten Lutschers wird der erfindungsgemäße Lutscher erhalten. Das Abkühlen muss nicht zwangsläufig als letzter Schritt erfolgen, sondern kann auch während bzw. kontinuierlich im Zuge der Befüllung, Formung, und/oder Stiel-Einbringung erfolgen. Bevorzugt erfolgt das Abkühlen nach Einbringen des Stiels.

Im Prinzip ist es auch möglich, den mit dem beschriebenen Verfahren erhältlichen Lutscher mit flüssig gefülltem Kern und Stiel zusätzlich mit mindestens einer weiteren Beschichtung und/oder einem zusätzlichen Topping versehen wird. Geeignete Beschichtungen oder Toppings sind einem Fachmann bekannt.

In einer besonders bevorzugten Ausführungsform der Erfindung wird eine solche Beschichtung oder Topping in einem zusätzlichen Verfahrensschritt (8) auf den Lutscher aus Schritt (7) aufgebracht. Dabei kann das Aufbringen der Beschichtung durch Aufsprühen oder Eintauchen des Lutschers in die Beschichtungslösung erfolgen, wobei Aufsprühen bevorzugt ist. Durch das Aufsprühen ist es möglich, einen feinen Film der Beschichtungslösung auf den Lutscher aufzubringen.

In einer besonders bevorzugten Ausführungsform der Erfindung wird in einem solchen zusätzlichen Schritt (8) eine aromatisierte Beschichtungslösung auf den Lutscher aufgebracht. Dazu werden bevorzugt geeignete Aromen oder Aromalösungen in einer geeigneten Beschichtungslösung gelöst. Besonders bevorzugt sind Beschichtungslösungen auf Basis von pflanzlichen Fetten und Ölen, sowie mittel- bis langkettigen Di- und Triglyceriden, wobei mittelkettige Triglyceride pflanzlicher Fettsäuren, wie Glycerolester pflanzlicher Fettsäuren, besonders bevorzugt sind. Beispiele umfassen lebensmittelrechtlich zugelassene und für den Verzehr unbedenkliche Beschichtungslösungen. Eine ganz besonders bevorzugte Beschichtungslösung ist eine Mischung eines Aromas oder einer Aromalösung (Aromazubereitung) in einem Glycerolester einer pflanzlichen Fettsäure wie z.B. bekannt unter dem Handelsnamen WITARIX® MCT (60/40 Neutralöl). Dazu wird das Aroma oder die Aromazubereitung in der Beschichtungslösung (z.B. dem Öl oder dem Triglycerid) gelöst und anschließend auf den Lutscher in Schritt (8) wie oben beschrieben aufgebracht. Als Aromen oder Aromazubereitungen sind prinzipiell alle Aromen mit lebensmittelrechtlicher Zulassung und Unbedenklichkeit für den Verzehr einsetzbar. Bevorzugt werden solche mit angenehmen und/oder für den Konsumenten überraschenden Geschmackserlebnissen eingesetzt. Grundsätzlich können in die Beschichtungslösung auch feste oder partikuläre Bestandteile eingemischt und damit auf dem erfindungsgemäßen Lutscher aufgebracht werden. Mögliche feste oder partikuläre Bestandteile umfassen Pulver, wie z.B. Alkohol- oder Aromapulver, Gewürze wie z.B. Zimt, Kardamom, Chili, Pfeffer etc. Salz- oder Zuckerkristalle oder Frucht-/Gemüsepartikel etc.. Es ist auch möglich, solche festen oder partikulären Bestandteile durch Aufstreuen, Tauchen und andere geeignete Verfahren auf den Lutscher zusätzlich aufzubringen.

Danach wird das fertige Produkt abgekühlt und konfektioniert, z.B. in geeigneten Verpackungsmaterialien verpackt.

Gegenstand der Erfindung sind auch die nach den vorstehend beschriebenen Verfahren erhältlichen Lutscher.

### BESCHREIBUNG DER FIGUREN

Die in der Figurenbeschreibung verwendeten Bezugszeichen weisen folgende Bedeutung auf:
- **Figur 1:**: Erfindungsgemäßer Lutscher mit fester Lutscherhülle (1) und flüssigem Kern (2) und Stiel (3) mit Ankerregion (4)
- **Figur 2:**: Erfindungsgemäßer Lutscher mit fester Lutscherhülle (1) und füssigem Kern (2) und Stiel (3) mit Beschichtung (5)
- **Figur 3:**: Erfindungsgemäßer Stiel (3) mit Ankerregion (4)
- **Figur 4:**: Erfindungsgemäßer Stiel (3) mit Ankerregion (4) und zusätzlicher Stielmodifikation (5)

Die Erfindung wird durch die nachfolgenden Beispiele weiter veranschaulicht, ohne dass diese hierauf beschränkt werden soll.

### BEISPIELE

Die nachfolgende Tabelle 1 zeigt am Beispiel eines Lutschers mit 28 mm Gesamtdurchmesser erzielbare Füllungsgrade (Füllungsanteil [Gew.-%] bezogen auf den Gesamten Lutscher), Lutscherhüllen-Dicken (Mantelmasse Dicke [mm]), Füllvolumen (Volumen Füllung [mm³]) und Durchmesser der verfüllten Hohlräume (Durchmesser Füllung [mm]):

**Tabelle 1: Lutscher-Ausgestaltungen und Füllgrade**

| | | | |
|---|---|---|---|
| Lutscher-Durchmesser: | | 28 mm | |
| Lutscher-Volumen: | | 11.494,0 mm | |

| Füllungsanteil [%] | Mantelmasse Dicke [mm] | Volumen Füllung [mm³] | Durchmesser Füllung [mm] |
|---|---|---|---|
| 0 | 14,0 | 0,0 | 0,0 |
| 5 | 8,8 | 574,7 | 10,3 |
| 10 | 7,5 | 1.149,4 | 13,0 |
| 15 | 6,6 | 1.724,1 | 14,9 |
| 20 | 5,8 | 2.298,8 | 16,4 |
| 25 | 5,2 | 2.873,5 | 17,6 |
| 30 | 4,6 | 3.448,2 | 18,7 |
| 35 | 4,1 | 4.022,9 | 19,7 |

Die folgenden Beispiele beziehen sich auf erfindungsgemäße Lutscher der Variante b) und d) mit alkohol-haltiger Lutscherhülle.

### Beispiel 1: Herstellung der Lutscherhülle

Nach der Zusammensetzung gemäß Tabelle 2 und 3 wurde ein erfindungsgemäßer Lutscher mit einer Zusammensetzung der festen Lutscherhülle nach Tabelle 4 hergestellt.

**Tabelle 2: Hartbonbon-Hüllmasse**

| | |
|---|---|
| Nach dem Kochprozess | |

| **Rohstoff** | **Menge [Gew.-%]** |
|---|---|
| Isomalt | 79,0 |
| Polydextrose | 14,0 |
| Sorbit | 6,0 |
| Wasser | 1,0 |

**Tabelle 3: Kaschiermasse**

| **Rohstoff** | **Menge [Gew.-%]** |
|---|---|
| Polydextrose | 66,67 |
| Alkohol | 33,33 |

Die Hartbonbon-Hüllmasse wurde dabei durch Mischen von Isomalt, Sorbit und Polydextrose mit Wasser (Kochmasse) und Kochen bei 165 °C in einem Satzkocher erhalten. Gegebenenfalls können anschließend weitere Lebensmittelzusatzstoffe, wie vorstehend definiert, hinzugegeben und mit der Kochmasse in einem Aromamischgerät verrührt werden.

Die Kaschiermasse wurde durch Mischen von Polydextrose und Alkohol hergestellt.

Anschließend wurde die Hartbonbon-Hüllmasse flächig ausgestrichen und darauf die Kaschiermasse ausgestrichen. Aus dem so erhaltenen zweischichtigen Hüllmaterial wurde durch Falten der Schichten übereinander ein mehrschichtiges Hüllmaterial hergestellt, welches anschließend im Kegelroller und mittels Egalisierrollen, sowie Prägemaschinen in die gewünschte Form überführt wurde. In den so erhaltenen Formkörper wurde anschließend ein erfindungsgemäßer Stiel in das noch zähplastische Lutschermaterial eingedrückt.

Nach Abkühlen kann der so erhaltene Lutscher verpackt werden.

**Tabelle 4: Zusammensetzung des Lutschers (gesamt)**

| **Total** | **Menge [Gew.-%]** |
|---|---|
| Hartbonbon-Hüllmasse gesamt | 87,67 |
| Kaschiermasse gesamt | 12,33 |

Alkoholgehalt in der Hüllmasse (gesamt): 4,11 Gew.-%.

### Beispiel 2: Lutscher mit alkoholischer Füllung (20 % Alkoholgehalt in der Füllung)

Das Lutscherhüllmaterial wurde gemäß Beispiel 1 hergestellt.

Zusätzlich wurde ein Füllmaterial für die alkoholhaltige Füllung gemäß der Zusammensetzung nach Tabelle 5 hergestellt.

**Tabelle 5: alkoholhaltige Füllung**

| **Rohstoff** | **Menge [Gew.-%]** |
|---|---|
| Maltitolsirup | 75,00 |
| Alkohol | 25,00 |

Statt Maltitolsirup kann für die Füllung auch Glukose-Sirup oder Sorbitol verwendet werden. Gegebenenfalls können außerdem weitere Lebensmittelzusatzstoffe, wie vorstehend definiert, hinzugegeben und mit der Füllmasse verrührt werden.

Die so erhaltene alkoholhaltige Füllung wird über ein am Kegelroller angebrachtes Befüllungsrohr in den in dem Kegelroller hergestellten verjüngten Zuckerstrang gepumpt. Der befüllte Zuckerstrang wird anschließend durch Abschneiden bzw. Abquetschen und Prägen verschlossen und zu einem Formkörper geformt, in den anschließend ein erfindungsgemäßer Stiel in das noch zähplastische Lutschermaterial eingedrückt wird.

Nach Abkühlen kann der so erhaltene Lutscher verpackt werden.

**Tabelle 6: Zusammensetzung des Lutschers (gesamt)**

| **Total** | **Menge [Gew.-%]** |
|---|---|
| Lutscherhülle (gesamt) | 80,00 |
| alkoholhaltige Füllung | 20,00 |

Alkoholgehalt in der festen Lutscherhülle gesamt: 4,11 Gew.-%
Alkoholgehalt im Lutscher gesamt (Lutscherhülle + alkoholhaltige Füllung): 8,29 Gew.-%.

### Beispiel 3: Weitere Lutscher, wahlweise herstellbar mit alkoholischer Füllung oder nicht-alkoholischer Füllung, gemäß den vorstehenden Beispielen 1 und 2 mit variierender Kaschiermasse

**Tabelle 7: weitere mögliche Kaschiermassen**

| **Beispiel** | **Rohstoff** | **Menge [Gew.-%]** |
|---|---|---|
| 3-1 | Polydextrose | 17,5 |
| | Dextrin | 41 |
| | Celluloseether | 1,8 |
| | Alkohol | 39,7 |
| 3-2 | Hydroxypropylcellulose | 5 |
| | Alkohol | 95 |
| 3-3 | Hydroxypropylcellulose | 65 |
| | Alkohol | 35 |
| 3-4 | Komponente 3-3 | 72 |
| | Polydextrose | 28 |
| 3-5 | Komponente 3-4 | 72 |
| | Polydextrose | 28 |
| 3-6 | Polydextrose | 34 |
| | Alkohol | 66 |
| 3-7 | Maltodextrin auf Basis von Tapiokastärke | 30 |
| | Alkohol | 70 |

Die vorstehenden Kaschiermassen der Tabelle 7 können mit den Hartbonbon-Hüllmassen der Beispiele 1 und 2 oder mit anderen geeigneten erfindungsgemäßen Zusammensetzungen zur Bildung der Hartbonbon-Hüllmasse zu den erfindungsgemäßen Bonbonwaren hergestellt werden.

Der Hartbonbon-Hüllmasse (z.B. gemäß Beispiel 1) werden zusätzlich 2 bis 5 Gew.-% Glycerin beigemengt.

Grundsätzlich können mit den vorbeschriebenen Beispielen auch übliche nichtalkoholische flüssige oder fließfähige Füllungen verfüllt werden.

Desweiteren ist es möglich, einen flüssig gefüllten Lutscher auf Basis eines ausschließlich auf einer alkoholfreien Hartbonbon-Hüllmasse (z.B. gemäß Tabelle 2) entsprechend herzustellen.

Dabei können die Verfahren wie in Beispiel 1 und 2 beschrieben angewendet werden oder eines der anderen beschriebenen erfindungsgemäßen Verfahren. Aus den beschriebenen Komponenten können die erfindungsgemäßen Lutscher hergestellt werden, wie hierin beschrieben.

### Ergebnis:

Alle beispielgemäßen Ausführungsformen lassen sich gut verarbeiten und zu den erfindungsgemäßen Lutschern verarbeiten. Die damit erhältlichen Lutscher zeichnen sich durch eine hohe Dichtigkeit und eine verringerte Neigung zum Auslaufen der flüssigen Füllung aus. Die beschriebenen Ausführungsformen sind somit insbesondere für eine kontinuierliche Verfahrensführung, wie sie hierin beschrieben ist, geeignet. Insbesondere Ausführungsformen der Variante b) und d) zeigen außerdem eine kontinuierliche und stabile Freisetzung des in der Lutscherhülle enthaltenen Alkohols über die gesamte Verzehrzeit, selbst nach längerer Lagerzeit.

## Patentansprüche

1. Verfahren zur Herstellung eines Lutschers mit flüssig gefülltem Kern und Stiel, umfassend die folgenden Verfahrensschritte:
(1) Herstellung eines Lutscher-Hüllmaterials, umfassend die Schritte
(1-1) Herstellung einer Hartbonbon-Hüllmasse enthaltend mindestens einen Zucker, Zuckeraustauschstoff, zuckerähnlichen Stoff oder Mischungen davon und Glycerin, 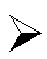
Mischen der Zuckerbestandteile mit Wasser,
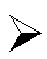 Kochen dieser Zuckermischung bei bis zu 170 °C bis zum Erhalt einer geschmolzenen homogenen Zuckermasse, 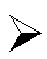
Einmischen von bis zu 6 Gew. % Glycerin, bezogen auf die Gesamtzusammensetzung der Hartbonbon-Hüllmasse, 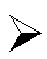
gegebenenfalls Einmischen eines oder mehrerer Zusatzstoffe aus der Gruppe bestehend aus Verdickungsmitteln, Aromastoffen, Farbstoffen, Süßstoffen, Säuerungsmitteln, Milchprodukten, färbenden Lebensmitteln und Mischungen davon unter 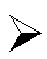
Erhalt einer viskosen, modellierbaren, zähplastischen, streich- oder fließfähigen Hartbonbon-Hüllmasse;
(1-2) Herstellung einer Kaschiermasse auf Basis mindestens eines Zuckers, Zuckeraustauschstoffs oder zuckerähnlichen Stoffs, und gegebenenfalls mindestens eines Verdickungsmittels aus der Gruppe der Cellulosen oder Hydrokolloidgele durch 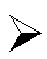
Mischen der Bestandteile der Kaschiermasse, 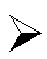
gegebenenfalls Einrühren von Ethanol oder einer alkoholischen Flüssigkeit, 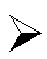
gegebenenfalls Einmischen eines oder mehrerer Zusatzstoffe aus der Gruppe bestehend aus Verdickungsmitteln, Aromastoffen, Farbstoffen, Süßstoffen, Säuerungsmitteln, Milchprodukten, färbenden Lebensmitteln und Mischungen davon unter 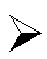
Erhalt einer homogenen viskosen, modellierbaren, zähplastischen, fließ- oder streichfähigen Mischung;
(2) Herstellung eines kontinuierlichen Zuckerstrangs, umfassend die Schritte
(2-1) Ausbringen der Hartbonbon-Hüllmasse aus Schritt (1-1) in einer kontinuierlichen Schicht und Abkühlen dieser Schicht auf eine Temperatur im Bereich von 30 °C bis 90 °C, und Einrollen, Falten oder Einklappen der Hartbonbon-Hüllmasse unter Erhalt eines ungefüllten Zuckerstrangs;
(2-2) Herstellung eines gefüllten Zuckerstrangs durch Aufbringen der Kaschiermasse aus Schritt (1-2) auf einer kontinuierlichen Schicht der Hartbonbon-Hüllmasse gemäß Schritt (2-1) und Umschließen der Kaschiermasse mit der Schicht der Hartbonbon-Hüllmasse durch Einrollen, Falten oder Einklappen der Hartbonbon-Hüllmasse unter Erhalt eines gefüllten Zuckerstrangs;
(3) Zuführung des gefüllten Zuckerstrangs aus Schritt (2-2), und des ungefüllten Zuckerstrangs aus Schritt (2-1), in einen Kegelroller oder Extruder und Formung zu einem verjüngten Zuckerstrang zur Bildung des Lutscher-Hüllmaterials;
(4) kontinuierliche Befüllung des verjüngten Zuckerstrangs mit einer flüssigen oder fließfähigen Füllung über ein am Austritt des Kegelrollers oder Extruders angeordneten Befüllungsrohr unter Erhalt eines flüssig verfüllten Zuckerstrangs;
(5) Formgebung des aus Schritt (4) erhaltenen flüssig verfüllten Zuckerstrangs durch Schneiden und/oder Prägen unter Erhalt eines Formkörpers mit flüssiger Füllung;
(6) Einbringen eines Stiels in den Formkörper aus Schritt (5); und
(7) Abkühlen des Formkörpers mit flüssiger Füllung und Stiel unter Erhalt eines Lutschers mit flüssig gefülltem Kern und Stiel, worin der Stiel aus einem Material gebildet ist, welches eine raue oder aufgeraute Oberfläche aufweist und/oder worin der Stiel **dadurch gekennzeichnet ist, dass** dieser an dem in den Formkörper eingebrachten Ende eine Ankerregion aufweist, mit der der Stiel in den Formkörper eingebracht und darin verankert wird.

2. Das Verfahren gemäß Anspruch 1, umfassend einen zusätzlichen Schritt (8) des Aufbringens einer Beschichtung auf den Lutscher aus Schritt (7), worin die Beschichtung vorzugsweise eine aromatisierte Beschichtung auf Basis eines Öls, Di- oder Triglycerids in Mischung mit einem Aroma oder einer Aromazubereitung ist.

3. Das Verfahren gemäß Anspruch 1 oder 2, welches **gekennzeichnet ist durch** eine verlangsamte kontinuierliche Verfahrensführung mit einer Formgebung in Schritt (5) von maximal 750 Lutschern pro Minute.

4. Das Verfahren nach einem der vorhergehenden Ansprüche, worin eine Kaschiermasse gemäß Schritt (1-2) auf Basis mindestens eines Zuckers, Zuckeraustauschstoffs oder zuckerähnlichen Stoffs, und gegebenenfalls mindestens eines Verdickungsmittels aus der Gruppe der Cellulosen oder Hydrokolloidgele, hergestellt wird, in die außerdem Ethanol oder eine alkoholische Flüssigkeit eingearbeitet wird; und umfassend die Schritte
(2) Herstellung des kontinuierlichen Zuckerstrangs aus mindestens einem gefüllten Zuckerstrang gemäß Schritt (2-2) sowie mindestens einem ungefüllten Zuckerstrang gemäß Schritt (2-1);
(3) Herstellung des verjüngten Zuckerstrangs zur Bildung des Lutscher-Hüllmaterials aus dem mindestens einen gefüllten sowie dem mindestens einen ungefüllten Zuckerstrang aus Schritt (2-2) bzw. (2-1) im Kegelroller oder Extruder;
(4) kontinuierliche Befüllung des verjüngten Zuckerstrangs mit einer flüssigen oder fließfähigen Füllung;
(5) Formgebung durch Prägen unter Erhalt eines Formkörpers mit flüssiger Füllung;
(6) Einbringen eines Stiels aus einem Material, welches eine raue oder aufgeraute Oberfläche aufweist und/oder der **dadurch gekennzeichnet ist, dass** dieser an dem in den Formkörper eingebrachten Ende eine Ankerregion aufweist mit der der Stiel in den Formkörper aus Schritt (5) eingebracht und darin verankert wird; und
(7) Abkühlen des Formkörpers mit flüssiger Füllung und Stiel unter Erhalt eines Lutschers mit flüssig gefülltem Kern und Stiel sowie alkoholhaltigem Lutscher-Hüllmaterial.

5. Das Verfahren nach einem der vorhergehenden Ansprüche, worin
die Kaschiermasse in Schritt (1-2) eine Temperatur von < 40 °C, bevorzugter, < 30 °C, bevorzugter Raumtemperatur aufweist; und
worin in Schritt (2), (3), (4), (5) und (6) auf eine Verarbeitungstemperatur von ≤ 70 °C, bevorzugt < 70 °C temperiert wird.

6. Das Verfahren nach einem der vorhergehenden Ansprüche, worin in Schritt (4) Ethanol oder eine alkoholische Flüssigkeit oder fließfähige alkoholische Füllung verfüllt wird.

7. Das Verfahren nach einem der vorhergehenden Ansprüche, worin die Hartbonbon-Hüllmasse in Schritt (1-1) eine Schmelze mindestens eines Zuckeraustauschstoffs aus der Gruppe der Polyole ist.

8. Das Verfahren nach Anspruch 7, worin das mindestens eine Polyol ausgewählt ist aus Isomalt, Maltitol, Mannitol, Sorbitol, und Xylitol, besonders bevorzugt Isomalt.

9. Das Verfahren nach einem der vorhergehenden Ansprüche, worin in Schritt (1-2) Ethanol oder eine alkoholische Flüssigkeit in den mindestens einen Zucker, Zuckeraustauschstoff, zuckerähnlichen Stoff sowie gegebenenfalls das mindestens eine Verdickungsmittel aus der Gruppe der Cellulosen oder Hydrokolloidgele, die jeweils in fester oder pulverförmiger Form vorliegen, eingemischt wird.

10. Das Verfahren nach einem der vorhergehenden Ansprüche, worin in Schritt (1-2) mindestens ein festes oder pulverförmiges Verdickungsmittel aus der Gruppe der Cellulosen ausgewählt ist aus mikrokristalliner Cellulose, Methyl-, Ethyl-, Hydroxypropyl-, Hydroxypropylmethyl-, Methylethyl-, Carboxymethyl, Natriumcarboxymethylcellulose oder Celluloseether zugesetzt wird, wobei Hydroxypropylcellulose besonders bevorzugt ist.

11. Das Verfahren nach einem der vorhergehenden Ansprüche, worin in Schritt (1-1) und/oder (1-2) ein oder mehrere Zusatzstoffe aus der Gruppe bestehend aus Verdickungsmitteln, Aromastoffen, Farbstoffen, Süßstoffen, Säuerungsmitteln, Milchprodukten, färbenden Lebensmitteln und Mischungen davon zugesetzt werden.

12. Das Verfahren nach einem der vorhergehenden Ansprüche, worin der Anteil des Ethanols oder der alkoholischen Flüssigkeit in der Kaschiermasse aus Schritt (1-2) 0,1 bis 60 Gew.-%, bezogen auf die Kaschiermasse, beträgt.

13. Das Verfahren nach einem der vorhergehenden Ansprüche, worin die flüssige oder fließfähige Füllung gemäß Schritt (4) Glukosesirup, Maltitolsirup, Sorbitol oder Mischungen davon, gegebenenfalls Alkohol sowie gegebenenfalls weitere Lebensmittelzusatzstoffe aus der Gruppe der Aromastoffe, Farbstoffe, Säuerungsmittel, Süßstoffe, Verdickungsmittel und Mischungen davon, sowie Milchprodukte enthält.

14. Ein Lutscher mit flüssig gefülltem Kern und Stiel, der durch das Verfahren nach einem der Ansprüche 1 bis 13 erhältlich ist.

## Claims

1. A method of producing a lollipop with a liquid-filled core and a stick, comprising the following process steps:
(1) producing a lollipop coating material comprising the steps
(1-1) producing a hard candy coating material containing at least one of sugar, sugar substitute, sugar-like substance, or mixtures thereof and glycerol,
- mixing the sugar ingredients with water,
- cooking said sugar mixture at up to 170 °C until obtaining a molten homogeneous sugar mass,
- mixing in up to 6% by weight of glycerol relative to the total composition of the hard candy coating material,
- optionally mixing in one or more additives selected from the group consisting of thickeners, flavours, colorants, sweeteners, acidulants, dairy products, coloring foodstuffs and mixtures thereof, thereby
- obtaining a viscous, mouldable, viscoplastic, spreadable or flowable hard candy coating material;
(1-2) producing a lamination composition based on at least one sugar, sugar substitute or sugar-like substance, and optionally at least one thickening agent from the group of celluloses or hydrocolloids by
- mixing the components of the lamination composition,
- optionally stirring in ethanol or an alcoholic liquid,
- optionally mixing in one or more additives selected from the group consisting of thickeners, flavours, colorants, sweeteners, acidulants, dairy products, coloring foodstuffs and mixtures thereof, thereby
- obtaining a homogeneous viscous, mouldable, viscoplastic, flowable or spreadable mixture;
(2) producing a continuous sugar strand comprising the steps
(2-1) dispensing the hard candy coating material from step (1-1) in a continuous layer and cooling of said layer to a temperature in the range of from 30°C to 90°C, and rolling, folding or tucking the hard candy coating material to obtain an unfilled sugar strand;
(2-2) producing a filled sugar strand by applying the lamination composition of step (1-2) onto a continuous layer of the hard candy coating material according to step (2-1) and enclosing the lamination composition with the layer of hard candy coating material by rolling, folding or tucking the hard candy coating material to obtain a filled sugar strand;
(3) supplying the filled sugar strand from step (2-2) and the unfilled sugar strand from step (2-1) into a cone roller or extruder and forming it into a tapered sugar strand to form the lollipop coating material;
(4) continuously filling the tapered sugar strand with a liquid or flowable filling via a filling tube located at the outlet of the cone roller or extruder to obtain a liquid filled sugar strand;
(5) moulding the liquid-filled sugar strand obtained from step (4) by cutting and/or embossing so as to obtain a moulded body with liquid filling;
(6) inserting a stick into the moulded body obtained in step (5); and
(7) cooling of the moulded body with liquid filling and stick to obtain a lollipop with liquid-filled core and stick, wherein the stick is formed of a material having a rough or roughened surface and/or wherein the stick is **characterised in that** it has an anchoring region at the end inserted into the moulded body by means of which the stick is inserted into the moulded body and anchored therein.

2. The method according to claim 1, comprising an additional step (8) of applying a coating to the lollipop of step (7), wherein the coating is preferably a flavoured coating based on an oil, di- or triglyceride in admixture with a flavour or a flavouring preparation.

3. The method according to claim 1 or 2, which is **characterised by** a slowed down continuous process with a moulding in step (5) of a maximum of 750 lollipops per minute.

4. The method according to any one of the preceding claims, wherein a laminating composition according to step (1-2) is prepared based on at least one sugar, sugar substitute or sugar-like substance, and optionally at least one thickener selected from the group of celluloses or hydrocolloids, into which ethanol or an alcoholic liquid is further incorporated; and comprising the steps of
(2) preparing the continuous sugar strand from at least one filled sugar strand according to step (2-2) and at least one unfilled sugar strand according to step (2-1);
(3) preparing the tapered sugar strand to form the lollipop coating material from the at least one filled sugar strand and the at least one unfilled sugar strand; and unfilled sugar strand of step (2-2) and (2-1), respectively, in a cone roller or extruder;
(4) continuously filling the tapered sugar strand with a liquid or flowable filling;
(5) moulding by embossing to obtain a moulded body with a liquid filling;
(6) inserting a stick of a material having a rough or roughened surface and/or **characterised in that** it has an anchoring region at the end inserted into the moulded body with which the stick is inserted into the moulded body of step (5) and anchored therein; and
(7) cooling the moulded body with liquid filling and stick to obtain a lollipop with liquid filled core and stick and alcohol containing lollipop coating material.

5. The method according to any one of the preceding claims, wherein
the lamination composition in step (1-2) has a temperature of < 40 °C, preferably, < 30 °C, more preferably room temperature; and wherein
in step (2), (3), (4), (5) and (6) a processing temperature of ≤ 70 °C, preferably < 70 °C is adjusted.

6. The method according to any one of the preceding claims, wherein in step (4) ethanol or an alcoholic liquid or flowable alcoholic filling is filled.

7. The method according to any one of the preceding claims, wherein the hard candy coating material in step (1-1) is a melt of at least one sugar substitute selected from the group of polyols.

8. The method according to claim 7, wherein the at least one polyol is selected from isomalt, maltitol, mannitol, sorbitol, and xylitol, particularly preferably isomalt.

9. The method according to any one of the preceding claims, wherein in step (1-2) ethanol or an alcoholic liquid is mixed into the at least one sugar, sugar substitute, sugar-like substance, and optionally the at least one thickening agent selected from the group celluloses or hydrocolloids, each in solid or powder form.

10. The method according to any one of the preceding claims, wherein in step (1-2) at least one solid or powder thickener from the group of celluloses, selected from microcrystalline cellulose, methyl-, ethyl-, hydroxypropyl-, hydroxypropylmethyl-, methylethyl-, carboxymethyl-, sodium carboxymethyl cellulose or cellulose ether, is added, among which hydroxypropyl cellulose is particularly preferred.

11. The method according to any one of the preceding claims, wherein in step (1-1) and/or (1-2) one or more additives from the group consisting of thickeners, flavors, colorants, sweeteners, acidulants, dairy products, coloring foodstuffs and mixtures thereof are added.

12. The method according to any one of the preceding claims, wherein the proportion of the ethanol or alcoholic liquid in the laminating composition from step (1-2) is 0.1 to 60% by weight relative to the lamination composition.

13. The method according to any one of the preceding claims, wherein the liquid or flowable filling according to step (4) comprises glucose syrup, maltitol syrup, sorbitol or mixtures thereof, optionally alcohol, and optionally further food additives from the group of flavors, colorants, acidulants, sweeteners, thickeners and mixtures thereof, as well as dairy products.

14. A lollipop with liquid-filled core and stick, obtainable by the method of any one of claims 1 to 13.

## Revendications

1. Procédé de fabrication d'une sucette munie d'un cœur fourré de liquide et d'un bâtonnet, comprenant les étapes de procédé suivantes :
(1) la fabrication d'un matériau d'enveloppe de sucette, comprenant les étapes
(1-1) la fabrication d'une masse d'enveloppe en bonbon dur contenant au moins un sucre, un substitut du sucre, une matière analogue au sucre ou des mélanges de ceux-ci et de la glycérine,
- le mélange des constituants sucres avec de l'eau,
- la cuisson de ce mélange de sucres à une température de jusqu'à 170 °C jusqu'à l'obtention d'une masse de sucres homogène fondue,
- le délayage de jusqu'à 6 % en poids de glycérine, par rapport à la composition totale de la masse d'enveloppe en bonbon dur,
- éventuellement le délayage d'un ou de plusieurs additifs du groupe constitué par les épaississants, les arômes, les colorants, les édulcorants, les acidifiants, les produits laitiers, les produits alimentaires colorants et les mélanges de ceux-ci avec
- l'obtention d'une masse d'enveloppe en bonbon dur visqueuse, modelable, ductile, apte à l'étalement ou à l'écoulement ;
(1-2) la fabrication d'une masse de stratification à base d'au moins un sucre, un substitut du sucre ou une matière analogue au sucre, et éventuellement d'au moins un épaississant du groupe des celluloses ou des gels hydrocolloïdaux par
- mélange des constituants de la masse de stratification ;
- éventuellement délayage d'éthanol ou d'un liquide alcoolique,
- éventuellement délayage d'un ou de plusieurs additifs du groupe constitué par les épaississants, les arômes, les colorants, les édulcorants, les acidifiants, les produits laitiers, les produits alimentaires colorants et les mélanges de ceux-ci avec
- obtention d'un mélange homogène visqueux, modelable, ductile, apte à l'écoulement ou à l'étalement ;
(2) la fabrication d'un boudin de sucre continu, comprenant les étapes
(2-1) l'application de la masse d'enveloppe en bonbon dur de l'étape (1-1) en une couche continue et le refroidissement de cette couche à une température dans la plage allant de 30 °C à 90 °C, et l'enroulement, le pliage ou le rabattement de la masse d'enveloppe en bonbon dur avec l'obtention d'un boudin de sucre non fourré ;
(2-2) la fabrication d'un boudin de sucre fourré par application de la masse de stratification de l'étape (1-2) sur une couche continue de la masse d'enveloppe en bonbon dur selon l'étape (2-1) et l'entourage de la masse de stratification avec la couche de la masse d'enveloppe en bonbon dur par enroulement, pliage ou rabattement de la masse d'enveloppe en bonbon dur avec l'obtention d'un boudin de sucre fourré ;
(3) l'acheminement du boudin de sucre fourré de l'étape (2-2), et du boudin de sucre non fourré de l'étape (2-1), dans un rouleau conique ou une extrudeuse et la mise en forme en un boudin de sucre effilé pour former le matériau d'enveloppe de sucette ;
(4) le fourrage continu du boudin de sucre effilé avec un fourrage liquide ou apte à l'écoulement par l'intermédiaire d'un tube de fourrage agencé à la sortie du rouleau conique ou de l'extrudeuse avec l'obtention d'un boudin de sucre fourré de liquide ;
(5) le façonnage du boudin de sucre fourré de liquide obtenu à partir de l'étape (4) par découpe et/ou gaufrage avec l'obtention d'un corps moulé muni d'un fourrage liquide ;
(6) l'introduction d'un bâtonnet dans le corps moulé de l'étape (5) ; et
(7) le refroidissement du corps moulé muni d'un fourrage liquide et d'un bâtonnet avec l'obtention d'une sucette munie d'un cœur fourré de liquide et d'un bâtonnet, le bâtonnet étant formé en un matériau qui présente une surface rugueuse ou rugosifiée et/ou le bâtonnet étant **caractérisé en ce que** celui-ci présente à l'extrémité introduite dans le corps moulé une région d'ancrage, avec laquelle le bâtonnet est introduit dans le corps moulé et ancré dans celui-ci.

2. Procédé selon la revendication 1, comprenant une étape supplémentaire (8) d'application d'un revêtement sur la sucette de l'étape (7), le revêtement étant de préférence un revêtement aromatisé à base d'une huile, d'un di- ou triglycéride en mélange avec un arôme ou une préparation d'arôme.

3. Procédé selon la revendication 1 ou 2, qui est **caractérisé par** une réalisation de procédé continue ralentie avec un façonnage dans l'étape (5) d'au plus 750 sucettes par minute.

4. Procédé selon l'une quelconque des revendications précédentes, dans lequel une masse de stratification selon l'étape (1-2) à base d'au moins un sucre, un substitut du sucre ou une matière analogue au sucre, et éventuellement d'au moins un épaississant du groupe des celluloses ou des gels hydrocolloïdaux est fabriquée, dans laquelle de l'éthanol ou un liquide alcoolique est en outre incorporé ; et comprenant les étapes
(2) la fabrication du boudin de sucre continu à partir d'au moins un boudin de sucre fourré selon l'étape (2-2), ainsi que d'au moins un boudin de sucre non fourré selon l'étape (2-1) ;
(3) la fabrication du boudin de sucre effilé pour la formation du matériau d'enveloppe de sucette à partir de l'au moins un boudin de sucre fourré, ainsi que de l'au moins un boudin de sucre non fourré de l'étape (2-2) et (2-1) dans le rouleau conique ou l'extrudeuse ;
(4) le fourrage continu du boudin de sucre effilé avec un fourrage liquide ou apte à l'écoulement ;
(5) le façonnage par gaufrage avec l'obtention d'un corps moulé muni d'un fourrage liquide ;
(6) l'introduction d'un bâtonnet en un matériau qui présente une surface rugueuse ou rugosifiée et/ou qui est **caractérisé en ce que** celui-ci comprend à l'extrémité introduite dans le corps moulé une région d'ancrage avec laquelle le bâtonnet est introduit dans le corps moulé de l'étape (5) et ancré dans celui-ci ; et
(7) le refroidissement du corps moulé muni d'un fourrage liquide et d'un bâtonnet avec l'obtention d'une sucette munie d'un cœur fourré de liquide et d'un bâtonnet, ainsi que d'un matériau d'enveloppe de sucette contenant un alcool.

5. Procédé selon l'une quelconque des revendications précédentes, dans lequel
la masse de stratification dans l'étape (1-2) présente une température de < 40 °C, de manière davantage préférée, < 30 °C, de manière davantage préférée la température ambiante ; et
dans lequel, dans l'étape (2), (3), (4), (5) et (6), une régulation en température à une température d'usinage de ≤ 70 °C, de préférence < 70 °C, a lieu.

6. Procédé selon l'une quelconque des revendications précédentes, dans lequel, dans l'étape (4), un fourrage est effectué avec de l'éthanol ou un liquide alcoolique ou un fourrage alcoolique apte à l'écoulement.

7. Procédé selon l'une quelconque des revendications précédentes, dans lequel la masse d'enveloppe en bonbon dur dans l'étape (1-1) est une masse fondue d'au moins un substitut du sucre du groupe des polyols.

8. Procédé selon la revendication 7, dans lequel l'au moins un polyol est choisi parmi l'isomaltol, le maltitol, le mannitol, le sorbitol et le xylitol, de manière particulièrement préférée l'isomaltol.

9. Procédé selon l'une quelconque des revendications précédentes, dans lequel, dans l'étape (1-2), de l'éthanol ou un liquide alcoolique est délayé dans l'au moins un sucre, un substitut du sucre, une matière analogue au sucre, ainsi qu'éventuellement l'au moins un épaississant du groupe des celluloses ou des gels hydrocolloïdaux, qui se présentent à chaque fois sous forme solide ou pulvérulente.

10. Procédé selon l'une quelconque des revendications précédentes, dans lequel, dans l'étape (1-2), au moins un épaississant solide ou pulvérulent du groupe des celluloses est choisi parmi la cellulose microcristalline, la méthyl-, l'éthyl-, l'hydroxypropyl-, l'hydropropylméthyl-, la méthyléthyl-, la carboxyméthyl-, la sodium-carboxyméthylcellulose ou un éther de cellulose est ajouté, l'hydroxypropylcellulose étant particulièrement préférée.

11. Procédé selon l'une quelconque des revendications précédentes, dans lequel, dans l'étape (1-1) et/ou (1-2), un ou plusieurs additifs du groupe constitué par les épaississants, les arômes, les colorants, les édulcorants, les acidifiants, les produits laitiers, les produits alimentaires colorants et les mélanges de ceux-ci sont ajoutés.

12. Procédé selon l'une quelconque des revendications précédentes, dans lequel la proportion de l'éthanol ou du liquide alcoolique dans la masse de stratification de l'étape (1-2) est de 0,1 à 60 % en poids, par rapport à la masse de stratification.

13. Procédé selon l'une quelconque des revendications précédentes, dans lequel le fourrage liquide ou apte à l'écoulement selon l'étape (4) contient du sirop de glucose, du sirop de maltitol, du sorbitol ou des mélanges de ceux-ci, éventuellement un alcool, ainsi qu'éventuellement d'autres additifs pour produits alimentaires du groupe des arômes, des colorants, des acidifiants, des édulcorants, des épaississants et des mélanges de ceux-ci, ainsi que des produits laitiers.

14. Sucette munie d'un cœur fourré de liquide et d'un bâtonnet, qui peut être obtenue par le procédé selon l'une quelconque des revendications 1 à 13.
